# EUROPEAN PATENT APPLICATION

(11) **EP 4 773 583 A1**
(43) Date of publication of application: **08.07.2026**
(21) Application number: 25215806.8
(22) Date of filing: 17.11.2025
(51) Int. Cl.: H04M 1/18, H04B 1/3888, A45C 11/00

(54) **A MOBILE PHONE CASE ASSEMBLY AND A MOBILE PHONE CASE CUSTOMIZED UNMANNED VENDING APPARATUS**

(30) Priority: 31.12.2024 CN 202411993035; 13.01.2025 CN 202520076071 U
(71) Applicant: Guangzhou YiXian Technology Co., Ltd., Guangzhou Guangdong 510145 (CN)
(72) Inventor: LAN, Jihua, Guangzhou, 510145 (CN); HUANG, Kaitao, Guangzhou, 510145 (CN); LIN, Zixuan, Guangzhou, 510145 (CN)
(74) Representative: Metida

(57) **Abstract**

The present application discloses a mobile phone case assembly and a mobile phone case customized unmanned vending apparatus, the mobile phone case includes a mobile phone case body configured with a receiving slot for holding a mobile phone, the receiving slot is provided with a mobile phone lens avoidance hole, a supporting shell is removably mounted in the receiving slot, and a plurality of storage slots are provided on the supporting shell; a lens protective frame is detachably storge in the storage slot and is detachably mounted to the mobile phone lens avoidance hole to form a flat printing surface on the side of the mobile phone case body opposite to the receiving slot. The apparatus includes a mobile phone case customized unmanned vending machine and the mobile phone case assembly; when printing the mobile phone case, the removable lens protective frame prevents interference with the movement of the printing head of the printing device, the printing head can reach the closest possible distance to the printing surface, ensuring superior print quality; after printing, remove the lens protective frame from the supporting shell and install it onto the mobile phone case body to form a complete mobile phone case.

## Description

### FIELD OF TECHNOLOGY

The application relates to the technical field of custom mobile phone cases, in particular to a mobile phone case assembly and a mobile phone case customized unmanned vending apparatus.

### BACKGROUND

Along with technological development, smartphones are widely used, and people will cover a phone case in the outside of the smartphone when buying the smartphone. The phone case can protect the smartphone, and decorate the phone to make the phone case more personalized.

In order to reduce labor costs, phone case customized unmanned vending machines are usually placed in shopping malls or some areas with a high volume of pedestrian flow to achieve unmanned self-service vending. Phone case customized unmanned vending machines can print images and designs provided by users onto a phone case via a printing device to offer personalized services.

The applicant discovered that: The print head of the printing device is positioned sufficiently close to the rear surface of the phone case to minimize the height difference between the print head and the printing surface of the phone case, thereby achieving clearer printing results. However, the rear surface of the current phone case usually has a protective frame structure for the camera lens, and these frames are fixed. Since the frames protrude from the rear surface of the phone case, the print head of the printing device is prone to colliding with the frames during printing, thereby affecting the printing quality.

### SUMMARY

Based on this, the present application provides a mobile phone case assembly, to overcome the deficiencies in the prior art.

In independent claim 1, the present application provides a mobile phone case assembly, and defines a mobile phone case assembly of independent claim 1 in some embodiments.

The present application further defines the mobile phone case assembly in claims 2-14, and defines a mobile phone case customized unmanned vending apparatus in claims 15.

Compared with the prior art, the detachable lens protection frame of the mobile phone case assembly in the present application is capable of preventing the lens protective frame from interfering with the movement of the printing head of the printing device. By configuring the lens protective frame as detachable, it remains separated from the mobile phone case body and is stored in the storage slot before printing. During printing, since the lens protective frame is not mounted on the mobile phone case body, it avoids the lens protective frame from hindering the printing head of the printing device from approaching the printing surface. The supporting shell is used to support the mobile phone case body, making the mobile phone case body is not prone to deform during transportation. The lens protective frame is stored in the storage slot in the mobile phone case body. This facilitates users fitting the lens protective frame immediately upon receiving the printed mobile phone case body, and it is also convenient for production, packaging and transportation. Once the mobile phone case has been printed, the lens protective frame is removed from the support shell and fitted into the mobile phone lens avoidance hole of the mobile phone case to body form a complete mobile phone case.

In addition, the mobile phone case assembly is not limited to being applied to the mobile phone case customized unmanned vending apparatus. They are also used in manually customized mobile phone case assembly, such as custom mobile phone cases printed by desktop UV printers, and custom mobile phone cases by hand-cut, etc.

The mobile phone case customized unmanned vending apparatus is designed with the rational layout of various structure of the mobile phone case customized unmanned vending machine. This makes the overall structure simple, the printing precise and the effect good, enabling the automatic printing and selling of the mobile phone cases.

For better understanding and implementation, the present application is described in detail below in conjunction with drawings.

### BRIEF DESCRIPTION

FIG. 1 is an exploded view of a mobile phone case assembly according to one embodiment of the present application;
FIG.2 is a schematic diagram of one side of the mobile phone case assembly according to one embodiment of the present application;
FIG.3 is a schematic diagram of the structure of the mobile phone case assembly according to one embodiment of the present application when the lens protective frame is concealed;
FIG.4 is a schematic diagram of the structure of the mobile phone case assembly according to one embodiment of the present application;
FIG.5 is an exploded view of the first protective frame in one embodiment of the present application;
FIG.6 is a schematic diagram of the structure of the second protective frame according to one embodiment of the present application;
FIG.7 is a schematic diagram of the structure of the third protective frame according to one embodiment of the present application;
FIG.8 is a schematic diagram of the structure of the fourth protective frame according to one embodiment of the present application;
FIG. 9 is a schematic diagram of a structure of a mobile phone case assembly according to another embodiment of the present application;
FIG.10 is a schematic diagram of a structure of one side of a lens protective frame according to another embodiment of the present application;
FIG.11 is a top view of the mobile phone case assembly according to another embodiment of the present application;
FIG.12 is a schematic diagram of the structure of a mobile phone case body according to one embodiment of the present application;
FIG.13 is a schematic diagram of the structure of a supporting shell according to one embodiment of the present application;
FIG.14 is a schematic diagram of the structure of the mobile phone case assembly according to one embodiment of the present application;
FIG.15 is a schematic diagram of the structure of the mobile phone case assembly according to another embodiment of the present application;
FIG.16 is a schematic structural diagram in top view of a mobile phone case customized unmanned vending apparatus according to one embodiment of the present application;
FIG.17 is a schematic structural diagram of a mobile phone case printing device according to an embodiment of the present application;
FIG. 18 is a schematic diagram of one side of a mobile phone case storage handling mechanism according to an embodiment of the present application;
FIG.19 is a schematic structural view of another side of the mobile phone case storage handling mechanism according to an embodiment of the present application;
FIG.20 is a schematic view of a discharging box according to an embodiment of the application;
FIG.21 is a schematic structural view of a bin according to one embodiment of the present application;
FIG.22 is a schematic structural view of a printing mechanism according to one embodiment of the present application;
FIG.23 is a schematic structural view of one side of the printing mechanism according to one embodiment of the present application;
FIG.24 is a schematic structural view of the other side of the printing mechanism according to one embodiment of the present application;
FIG.25 is a schematic structural view of a printing mechanism of an embodiment of the present application when the print head assembly is hidden;
FIG. 26 is a schematic structural view of the printing mechanism according to one embodiment of the present application when equipped with a protective cover;
FIG.27 is a schematic structural view of one side of the printing mechanism according to one embodiment of the present application when equipped with the protective cover;
FIG.28 is a schematic structural view of a shaping jig for the mobile phone case according to one embodiment of the application;
FIG.29 is a cross-sectional view of the shaping jig for the mobile phone case according to one embodiment of the present application;
FIG.30 is a schematic diagram of a positioning process of the shaping jig for the mobile phone case according to one embodiment of the application when using a first positioning method;
FIG.31 is a schematic diagram of a positioning process of the shaping jig for the mobile phone case according to one embodiment of the application when using a second positioning method;
FIG.32 is a schematic diagram of a positioning process of the shaping jig for the mobile phone case according to one embodiment of the application when using a third positioning method;
FIG.33 is a schematic structural view of a movable positioning member and a positioning power device according to one embodiment of the present application;
FIG.34 is a schematic structural view of one side of the partial structure of the mobile phone case printing device according to one embodiment of the present application;
FIG.35 is a cross-sectional view of a part of the mobile phone case printing device according to one embodiment of the present application;
FIG.36 is a cross-sectional view of a height adjustment mechanism according to one embodiment of the present application;
FIG.37 is a cross-sectional view of one side of the height adjustment mechanism according to one embodiment the present application.

Explanation of reference symbols:
101. Mobile phone case body; 1011. Receiving slot; 1012. Mobile phone lens avoidance hole; 1013. Clamping section; 1014. Identifying section; 1015. First locating groove; 1016. Second locating groove; 1017. Mounting slot; 1018. Magnetic part; 1019. Printing section; 1020. Printing surface; 1022. First limiting flange; 102. Supporting shell; 1021. Storage slot; 1023. Second limiting flange; 1024. First avoidance recess; 1025. Limiting protrusion; 1026. Transition surface; 1027.Second avoidance recess; 103. Lens protective frame; 1031. Snap groove; 1032. First protective frame; 1321. Light through hole; 1322. Light transmission lens; 1033. Second protective frame; 1331. First avoidance frame opening; 1034. Third protective frame; 1341. Second avoidance frame opening; 1342. Protective cover; 1035. Fourth protective frame; 1351. Bracket; 10. Base frame; 11. Bin; 111. Bin outlet; 112. Avoidance gap; 12. Discharging box; 121. Feed bin opening; 122. Inclined guide plate; 20. Mobile phone case storage and conveying mechanism; 210. Multi-axis translational driving unit; 211. First translational drive assembly; 212. Second translational drive assembly; 220. Rotational drive unit; 230. Suction unit; 231. Rotating arm; 232. Vacuum chuck; 30. Mobile phone case printing device; 40. Supporter; 41. Support beam; 411. Head guide rail; 412. Grating Mounting holder; 413. First limiting section; 50. Printing mechanism; 510. Printing head unit; 511. Second limiting section; 512. Extension section; 513. Towing chain; 520. Printing head drive unit; 530. Position detection unit; 531.Grating sensor; 532.Grating strip; 540. Protective cover; 541. Printing space; 60. Mobile phone case shaping jig; 610. Mobile phone case shaping seat; 611. Shaping position; 612. Installation cavity; 613. Guide slot; 614. Mobile phone case detection unit; 620. Position unit; 621. Positioning drive unit; 6211. Positioning power unit; 62111. Positioning drive motor; 62112. Positioning transmission gear; 622. Positioning part; 6221. Movable positioning part; 62211. Rack section; 62212. shielding plate; 6222. Fixed positioning part; 70. Height adjustment mechanism; 710. Lifting drive unit; 711. Base; 7111. Installation section; 7112. Installation cavity; 7113. First mounting hole; 7114. Second mounting hole;7115. Mounting opening; 712. Lifting power motor; 713. Lifting transmission unit; 7131. Synchronous belt; 7132. Drive synchronous wheel; 7133. Transmission synchronous wheel; 7134. First guiding synchronous wheel; 7135. Second guiding synchronous wheel; 714. Lifting lead screw; 720. Height detection unit; 721. Light emitter; 722. Light receiver; 80. Conveying mechanism; 90. Mobile phone case.

### DETAILED DESCRIPTION

The following description of the embodiments of the present application will be made clearly and completely with reference to the accompanying drawings, in which it is apparent that the embodiments described are only some embodiments of the present application, but not all embodiments. All other embodiments, which can be made by those skilled in the art based on the embodiments of the application without making any effort, are intended to be within the scope of the application. In the description of the present application, unless otherwise indicated, the meaning of "plurality" is 2 or more, and the meaning of "several" is 1 or more. Furthermore, the terms "first," "second," and the like, are used for descriptive purposes only and are not to be construed as indicating or implying a relative importance or implicitly indicating the number of technical features indicated unless otherwise indicated.

In the description of the present application, it should be understood that the terms "center", "longitudinal", "transverse", "up", "down", "front", "rear", "left", "right", "vertical", "top", "bottom", "inside", and "outside" are based on the orientation or positional relationships shown in the accompanying drawings. These terms are used solely for the purpose of facilitating the description of the present application and simplifying the description. They do not indicate or imply that the devices or elements referred to must have a specific orientation, be constructed in a specific orientation, or operate in a specific orientation. Therefore, they should not be construed as limitations on the present application.

In the description of this application, unless otherwise explicitly specified and limited, the terms "installed," "connected," "coupled," and "fixed" should be interpreted broadly. For example, they refer to fixed connections, removable connections, or integral structures; mechanical connections or electrical connections; direct connections or indirect connections via intermediate media; or internal communication between two components or the interactive relationship between two components. For those skilled in the art, the specific meanings of the above terms in this application are understood based on the particular circumstances.

In the description of the present application, references to terms such as "an embodiment" "some embodiments" or "some examples" indicate that the specific features, structures, materials or characteristics described in connection with that embodiment or example are included in at least one embodiment or example of the present application. In this specification, the illustrative use of the above terms does not necessarily refer to the same embodiment or example. Moreover, the specific features, structures, materials or characteristics described are appropriately combined in any one or more embodiments or examples.

### A first embodiment

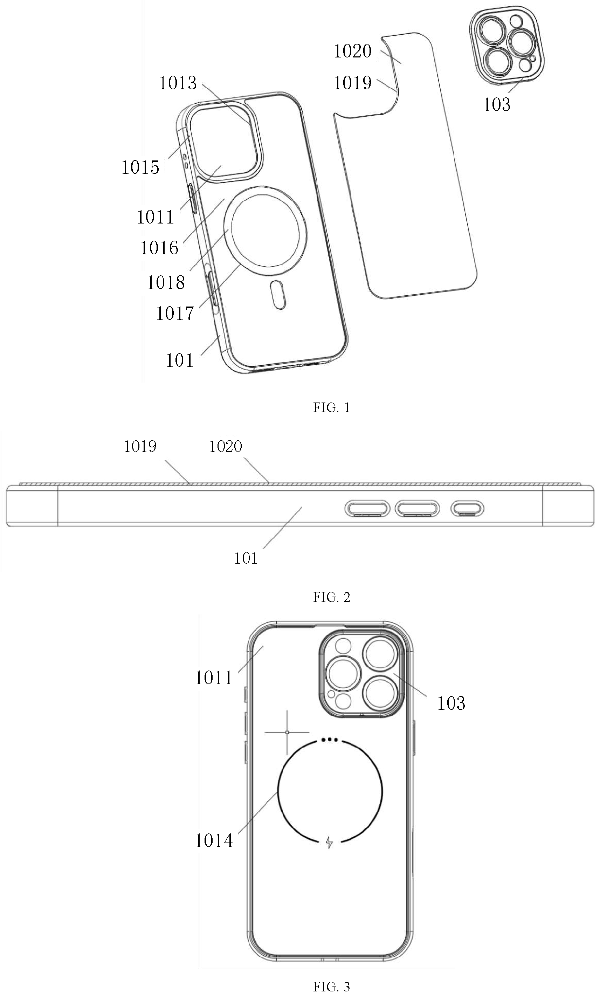

Referring to FIG. 1 and 2, a mobile phone case assembly is provided in this embodiment of the present application, comprising:
Mobile phone case body 101, which is configured with a receiving slot 1011 for holding a phone.

Printing section 1019, which is positioned on one side of the mobile phone case body 101 opposite the receiving slot 1011. A printing surface 1020 with a predetermined color is formed on the printing section 1019. The printing surface 1020 is aligned with or protrudes beyond the side of the mobile phone case body 101 opposite the receiving slot 1011. The printing surface is a single complete flat plane or composed of multiple flat planes joined together. For example, it consists of several independent printing surfaces arranged in a stepped configuration at different heights on the side of the mobile phone case body 101 opposite the receiving slot 1011, or each independent printing surface is separately arranged on the same horizontal plane.

The printing surface 1020 of the printing section 1019 is used for adhering printed ink. The printing section 1019 is integrally injection molded with the mobile phone case body 101, or assembled with the mobile phone case body 101 using other suitable methods. To facilitate the distinction between the printing section 1019 and the mobile phone case body 101, the edges of the printing surface 1020 form a distinct boundary with the mobile phone case body 101. This facilitates the printing device in recognizing the contour of the printing surface 1020, thereby enabling efficient printing.

During printing, the receiving slot 1011 of the mobile phone case body 101 is facing downward and the printing section 1019 facing upward. The printing surface 1020 is positioned at the highest point relative to the mobile phone case assembly. This allows the printing head of the printing device to achieve the optimal distance from the printing surface 1020 for printing without interference from other structures of the mobile phone case body 101, resulting in a clearer print quality.

The predetermined color is typically white because the printing device usually needs to spray a layer of ink, such as white ink, onto the printing position before printing the pattern. This ensures that the corresponding ink for the subsequent printed pattern adheres properly. The printing surface 1020 is preset to be white, which eliminates the need for the printing device to apply white ink thus saving printing time. Furthermore, when the printing device is not used for a period of time, the white ink often clogs the nozzles of the printing device, leading to the need for maintenance, eliminating the application of white ink can also reduce the frequency of maintenance and prevent the clogging of the printing device's nozzle.

Additionally, to meet personalized demands, the mobile phone case body 101 usually comes into different colors, while the printing surface 1020 adopts a distinct preset color, which also facilitates the distinction from the color of the mobile phone case body 101, and make it convenient for the printing device to accurately identify the printing surface 1020.However, depending on the actual situation, the preset color is also selected as other appropriate colors as needed, not limited to this example.

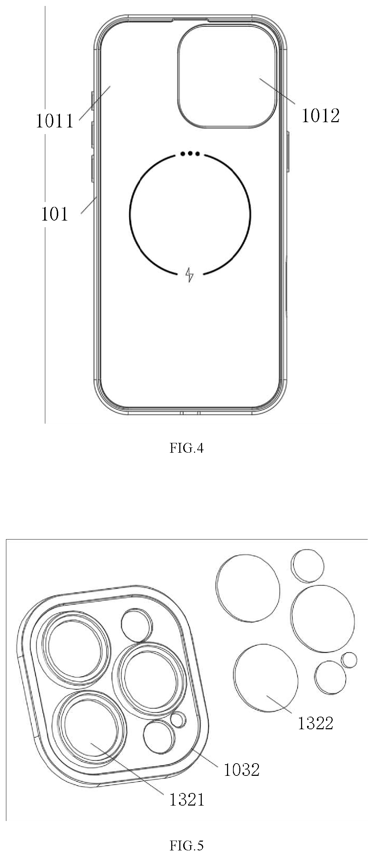

Referring to FIG. 3 and FIG.4, the receiving slot 1011 is provided with a mobile phone lens avoidance hole 1012, which extends to the side of the mobile phone case body 101 opposite the receiving slot 1011. After the mobile phone is placed into the receiving slot 1011, the mobile phone lens extent into the mobile phone lens avoidance hole 1012, or be positioned relative to the mobile phone lens avoidance hole 1012. The mobile phone case assembly further includes a lens protective frame 103, which is positioned at the mobile phone lens avoidance hole 1012 and detachably mounted to the mobile phone case body 101; or, the mobile phone case assembly further includes a plurality of lens protective frames 103 with different structures, any one of the lens protective frames 103 is positioned at the mobile phone lens avoidance hole 1012 and detachably mounted to the mobile phone case body 101 to form a flat printing surface on the side of the mobile phone case body 101 opposite the receiving slot 1011. When the lens protective frames 103 is not assembled with the mobile phone lens avoidance hole 1012, the printing surface is usually the highest point on the side of the mobile phone case body 101 opposite the mounting slot 1011 to allow the printing head of the printing device is able to positioned very close to the printing surface during printing, thereby enhancing printing precision and quality.

The lens protective frame 103 is designed to be detachable from the mobile phone case body 101. The purpose is to prevent the lens protective frame 103 from interfering with the printing head of the printing device from approaching the printing surface 1020. Since phones lenses usually protrude from the rear side of the phones, the lens of the phone pass through the mobile phone lens avoidance hole 1012. Consequently, the lens protective frame 103 requires sufficient height. This results in the lens protective frame 103 being positioned higher than the printing surface 1020 when the phone case body 101 is placed with the receiving slot 1011 facing downward. To avoid the lens protective frame 103, the printing head of the printing device increases the height, which results an excessive distance between the printing surface 1020 and the printing head of the printing device. By making the lens protective frame 103 to be removable, the mobile phone case assembly and the lens protective frame 103 are pre-stored in the mobile phone case customized unmanned vending machine. Before printing, the lens protective frame 103 is detached from the mobile phone case body 101. During printing, since the lens protective frame 103 is not mounted on the mobile phone case body 101, the lens protective frame 103 avoids from hindering the printing head of the printing device from approaching the printing surface 1020. After printing is complete, the lens protective frame 103 is installed onto the mobile phone case body 101.

In cases that the mobile phone case assembly includes a plurality of lens protective frames 103, users select the appropriate lens protective frame 103 to install on the mobile phone case body 101 according to their needs to meet personalized requirements.

In some embodiments, when the lens protective frame 103 is mounted on the mobile phone case body 101, the lens protective frame 103 protrudes from the side of the mobile phone case body 101 opposite the receiving slot 1011, and the height of the lens protective frame 103 relative to the side of the mobile phone case body 101 opposite the receiving slot 1011 is greater than the height of the lens protective frame 103 relative to the printing surface 1020. When the mobile phone case body 101 is placed with the receiving slot 1011 facing downward, the top of the lens protective frame 103 is higher than the height of the printing surface 1020. Therefore, before printing, the lens protective frame 103 is separated from the mobile phone case body 101 to prevent interference with the printing process. After the lens protective frame 103is installed onto the mobile phone case body 101, the lens protective frame 103 also provides enough height to accommodate the lens of the mobile phone, which is conducive to protecting the lens of the mobile phone.

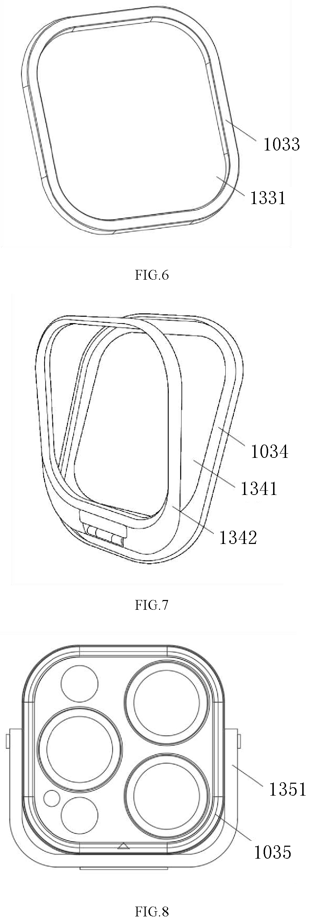

Referring to FIG.5 to FIG.8, in some embodiments, the lens protective frame 103 is a first protective frame 1032, a second protective frame 1033, a third protective frame 1034, or a fourth protective frame 1035. When the mobile phone case assembly includes a lens protective frame 103, the lens protective frame 103 is one of the first protective frame 1032, the second protective frame 1033, the third protective frame 1034, or the fourth protective frame 1035. When the mobile phone case assembly includes a plurality of lens protection frames 103, a plurality of the lens protective frames 103 are a combination of the first protective frame 1032, the second protective frame 1033, the third protective frame 1034, or the fourth protection frame 1035.For example, the mobile phone case assembly includes two lens protective frames 103, one of which is the first protective frame 1032, and the other is the second protective frame 1033. The configuration of multiple protective frames is conducive to meeting the personalized needs of the users.

A plurality of light through holes 1321 are provided on the first protective frame 1032, and a light transmission lens 1322 is installed in the light through hole 1321 to enhance the protective properties for the mobile phone lens and improve the sealing properties of the light through hole 1321. Or in other embodiments, the light transmission lens 1322 are omitted in the light through holes 1321, so that the light through holes 1321 remain unobstructed, facilitating the avoidance of structures or accessories on the mobile phone lens. Alternatively, other suitable light transmitting structures or functional structures are able to set inside the light through holes 1321. In the present embodiment, the light transmission lens 1322 is placed inside the light through hole 1321. When the first protective frame 1032 is detachably mounted to the mobile phone case body 101, the first protective frame 1032 covers the mobile phone lens avoidance hole 1012, and the light through hole 1321 communicates with the mobile phone lens avoidance hole 1012. The first protective frame 1032 enhances protection for the mobile phone lens by covering the mobile phone lens avoidance hole 1012. The light through hole 1321 is positioned to correspond with the mobile phone lens, while the lens prevents dust and other impurities from entering through the light through hole 1321. When a plurality of lenses is installed on the mobile phone, a plurality of light through holes 1321 is configured on the first protective frame 1032, which are arranged in correspondence with the lenses. The communication between the light through holes 1321 and the mobile phone lens avoidance hole 1012 means that light is able to pass through the light through holes 1321 into the mobile phone lens avoidance hole 1012.

A first avoidance frame opening 1331 is provided on the second protective frame 1033. When the second protective frame 1033 is detachably mounted to the mobile phone case body 101, the second protective frame 1033 surrounds the mobile phone lens avoidance hole 1012, with the first avoidance frame opening 1331 communicating with the mobile phone lens avoidance hole 1012. Due to some users having installed decorations or functional components on the lenses of the mobile phones, in order to prevent the second protective frame 1033 from interfering with the decorations, the second protective frame 1033 is placed around the lens of the mobile phone, providing protection for the sides of the mobile phone lens. And the decorations or the functional components are able to extend into the first avoidance frame opening 1331, preventing interference between the second protective frame 1033 and the decorations or the functional components.

A second avoidance frame opening 1341 and a protective cover 1342 are provided on the third protective frame 1033.The protective cover 1342 is movably coupled to the third protective frame 1034 and is able to move relative to the third protective frame 1034 to a position closing the second avoidance frame opening 1341 or to a position opening the second avoidance frame opening 1341. When the third protective frame 1035 is detachably mounted to the mobile phone case body 101, the second protective frame 1033 surrounds the mobile phone lens avoidance hole 1012, with the second avoidance frame opening 1341 communicating with the mobile phone lens avoidance hole 1012. By opening or closing the protective cover 1342, the user opens the protective cover 1342 when using the mobile phone lens and close the protective cover 1342 when not using the mobile phone lens, thereby providing effective protection for the mobile phone lens. The protective cover 1342 is slidably or rotatably mounted to the third protective frame 1034. For example, the protective cover 1342 is able to rotate relative to the third protective frame 1034 via a pivot shaft, or alternatively, a slide groove is provided on the third protective frame 1034, and the protective cover 1342 slides in the slide groove.

A bracket 1351 is provided on the fourth protective frame 1035. The bracket 1351 is movably mounted to the fourth protective frame 1035 and is able to move relative to the fourth protective frame 1035 to a folded position and an unfolded position. When the fourth protective frame 1035 is detachably mounted to the mobile phone case body 101, the fourth protective frame 1035 is positioned at the mobile phone lens avoidance hole 1012. When the bracket 1351 is in the unfolded position, the bracket 1351 extends to the outside of the mobile phone case body 101 on the side opposite to the receiving slot 1011. The bracket 1351 provides support for the mobile phone case body 101 as a phone stand. When the mobile phone needs to be placed upright or titled on the table, the bracket 1351 is moved to the unfold position. The mobile phone case body 101 is supported by the bracket 1351, thereby maintaining the position of the mobile phone. When the bracket 1351 is in the folded position, the bracket 1351 is positioned close to the fourth protective frame 1035 or the side of the mobile phone case body 101 opposite the receiving slot 1011, or the bracket 1351 maintains a minimal clearance from the fourth protective frame 1035 or the side of the mobile phone case body 101 opposite the receiving slot 1011, preventing the bracket 1351 from interfering with the user's grip on the mobile phone case body 101. In this embodiment, the bracket 1351 is rotatably mounted to the fourth protective frame 1035, using a similar mounting method to the protective cover 1342 on the third protective frame 1034. But, depending on the specific structure of the bracket 1351, other means of movement are also used, not limited to this example. The structure of the fourth protective frame 1035 is able to be achieved by adding the bracket 1351 on the first protective frame 1032 or the second protective frame 1033.

However, the structure of the lens protective frame 103 is not limited to the structure of the first protective frame 1032, the second protective frame 1033, the third protective frame 1034, and the fourth protective frame 1035. In the other embodiments, the skilled in the art can select other suitable structures based on this application.

In the other embodiments, a supporting shell 102 is removably mounted in the receiving slot 1011. The supporting shell 102 is able to support the mobile phone case body 101, preventing deformation of the mobile phone case body 101 during transportation. In particular with the mobile phone case body 101 is made of materials that are prone to change shape under external force, such as elastic silicone or soft rubber materials, the supporting shell 102 provides superior structural reinforcement.

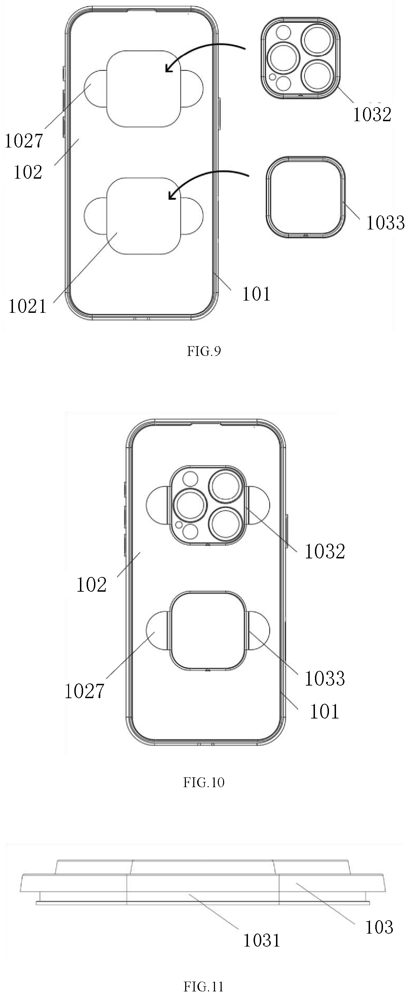

Referring to FIG.9 and FIG.10, the lens protective frames 103 are directly placed into the receiving slot 1011 of the mobile phone case body 101, users install the lens protective frame 103 onto the mobile phone case body 101 conveniently when printing is complete, it also facilitates production, packaging, and transportation. In the other embodiments, the lens protective frames 103 are placed separately from the mobile phone case body 101 in the mobile phone case customized unmanned vending machine. After the mobile phone case body 101 is printed, users take out the lens protective frames 103 from the mobile phone case customized unmanned vending machine for installation. In the other embodiments, a plurality of storage slots 1021 are provided on the supporting shell 102. The lens protective frames 103 are removably arranged in the storage slots 1021. After taking out the mobile phone case body 101, users remove the lens protective frame 103 from the storage slot 1021 of the supporting shell 102 as needed, and install the lens protective frame 103 onto the mobile phone case body 101. To place the mobile phone into the receiving slot 1011, the user only needs to remove the supporting shell 102 from the receiving slot 1011. In this embodiment, a plurality of storage slots 1021 are provided on the supporting shell 102, one corresponding lens protective frame 103 is placed in each storage slot 1021. After taking out the mobile phone case body 101, users select the appropriate lens protective frame 103 to install on the mobile phone case body 101 according to the needs. After the supporting shell 102 is taking out, it also facilitates the storage of the uninstalled lens protective frame 103, making it convenient for users to replace different lens protection frames 103 as needed at any time.

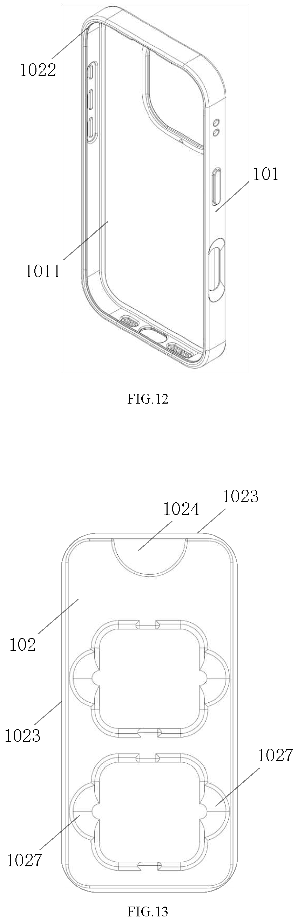

In the other embodiments, referring to FIG.12 and FIG.13, the mobile phone case body 101 is provided with a first limiting flange 1022 circumferentially at the top edge of the receiving slot 1011. The first limiting flange 1022 protrudes inward from the top edge of the receiving slot 1011 to restrain the mobile phone within the receiving slot 1011. In some embodiments, the bottom edge of the supporting shell 102 is provided with a second limiting flange 1023 circumferentially, the second limiting flange 1023 protrudes outward from the bottom of the supporting shell 102. The first limiting flange 1022 and the second limiting flange 1023 detachably limit the support shell 102 within the receiving slot 1011.

The first limiting flange 1022 is positioned on the inner side of the top edge of the receiving slot 1011, the second limiting flange 1023 is positioned on the outer side of the bottom of the supporting shell 102, extending outward from the bottom edge of the supporting shell 102. Therefore, after the supporting shell 102 is placed into the receiving slot 1011, when the support shell 102 is about to fall out of the receiving slot 1011, the second limiting flange 1023 abuts against the first limiting flange 1011, preventing the supporting shell 102 from falling out due to non-human factors. Furthermore, the first limiting flange 1022 is used to fix the mobile phone within the mobile phone case body. After the mobile phone is placed into the receiving slot 1011, the first limiting flange 1022 abuts against the frame of the mobile phone to prevent the mobile phone from falling out.

In the other embodiments, referring to FIG.12 to FIG.15, at least one end of the supporting shell 102 is provided with a first avoidance recess 1024 for accommodating a finger. A finger of a user is able to insert the first avoidance recess 1024 to remove the supporting shell 102 from the receiving slot 1011. The first avoidance recess 1024 makes it easier to remove the supporting shell 102 from the receiving groove 1011. In some embodiments, the first avoidance recess 1024 is provided on the edge of the supporting shell 102. When the supporting shell 102 is positioned within the receiving slot 1011, the first avoidance recess 1024 communicates with the receiving slot 1011. In these embodiments, the first avoidance recess 1024 and the receiving groove 1011 of the mobile phone case body define a space for the user's fingers to insert together. In some embodiments, at least two of the first avoidance recesses 1024 are arranged on opposite sides of the supporting shell 102, and the two first avoidance recesses 1024 are symmetrically arranged relative to the supporting shell 102. Users insert two fingers into the first avoidance recesses 1024 on both sides of the supporting shell 102, grasping both sides of the supporting shell 102 to make easy to remove the supporting shell 102.

In some embodiments, the first limiting flange 1022 is integrally formed with the mobile phone case body 101, and the supporting shell 102 is formed by thermoforming a rigid plastic film into a single piece. The second limiting flange 1023 and the first avoidance recess 1024 are also integrally formed with the supporting shell 102.

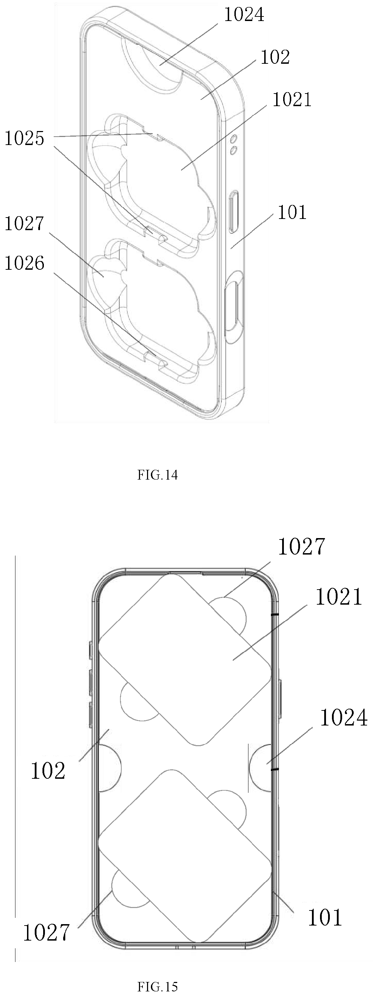

In some embodiments, a limiting protrusion 1025 extending inward toward the interior of the storage slot 1021 is provided from the top edge of the storage slot 1021 of the supporting shell 102. The lens protective frame 103 is detachably stored in the storage slot 1021 by the limiting protrusion 1025. Referring to FIG.13 and FIG.14 the limiting protrusion 1025 projects inward from the top edge of the storage slot 1021. The supporting shell 102 is made from elastic materials. When the lens protective frame 103 is inserted, the limiting protrusions 1025 are pushed apart by the lens protective frame 103, allowing the lens protective frame to place into the storage slot 1021. Subsequently, the limiting protrusions 1025 recovers to its original position under the effect of elastic materials, securely retaining the lens protective frame 103 within the storage slot 1021. This prevents the lens protective frame from easily falling out during handling or similar actions. When removing the lens protective frame 103, grasp the lens protective frame 103 and pull it out forcefully from the storage slot 1021.In some embodiments, at least two of the limiting protrusions 1025 are positioned at opposite sides of the storage slot 1021, with an arcuate transition surface 1026 formed between the limiting protrusions 1025 and the inner surface of the storage slot 1021. The arcuate Transition surface 1026 ensures that the lens protective frame 103 is not damaged by the limiting protrusions 1025 when fixed within the storage slot 1021, and also providing a more stable fixation.

In some embodiments, the supporting shell 102 is formed by thermoforming a rigid plastic film. The limiting protrusion 1025 is also integrally molded with the supporting shell 102.

In some embodiments, the supporting shell 102 further includes a second avoidance recess 1027 positioned at the edge of the storage slot 1021 for finger insertion. The second avoidance recess 1027 communicates with the storage slot 1021, allowing the user to insert a finger to conveniently remove the lens protective frame 103 from the storage slot 1021. After printing is completed on the printing surface of the mobile phone case body 101, the user removes the lens protective frame 103 from the storage slot 1021 and install it onto the mobile phone lens avoidance hole 1012 of the mobile phone case body 101 to protect the lens assembly of the mobile phone when the mobile phone is placed into the storage slot 1011 of the mobile phone case body 101. When removing the protective frame 103 from the storage slot 1021, the user inserts their finger into the second avoidance recess 1027, positioning the finger against the edge of the lens protective frame 103 to remove the protective frame 103. In the other embodiments, at least two of the second avoidance recess 1027 are positioned on opposite sides of the storage slot 1021, with the two second avoidance recess 1027 symmetrically arranged relative to the storage slot 1021. This configuration allows for better gripping of the two edges of the lens protective frame 103 with two fingers, enabling the lens protective frame 103 to be removed from the storage slot 1021 by applying force.

In some embodiments, the storage slot 1021is rectangular. At least two rectangular storage slots 1021 are arranged sequentially along the lengthwise direction of the supporting shell 102, and the storage slots 1021 are inclined relative to the supporting shell 102. When the supporting shell 102 is positioned in the receiving slot 1011, at least one corner of at least one of the storage slots 1021 communicates with the receiving slot 1011. By tilting the rectangular storage slot 1021 relative to the supporting shell 102, the volume of the storage slot 1021 is increased to accommodate larger lens protection frames 103. This configuration offers particular advantages for smartphones with larger lens modules. This implementation method is beneficial for the use of larger lens modules in the mobile phones.

Referring to FIG.11, in some embodiments, the lens protective frame 103 is provided with a snap groove 1031, and a clamping section 1013 is provided in the mobile phone lens avoidance hole 1012 extending circumferentially along the mobile phone lens avoidance hole 1012. The snap groove 1031 engages with the clamping section 1013 to enable a removable connection between the lens protective frame 103 and the mobile phone case body 101. In these embodiments, the first protective frame 1032, the second protective frame 1033, the third protective frame 1034, and the fourth protective frame 1035 are each equipped with a snap groove 1031.

However, the assembly method of the lens protective frame 103 with the mobile phone case body 101 is not limited to this configuration. The skilled in the art are able to select the other suitable structures based on this application. For example, a groove is provided on the mobile phone lens avoidance hole 1012, and the lens protective frame 103 engages with the groove via a snap-fit connection, or the lens protective frame 103 snaps into the mobile phone lens avoidance hole 1012 to make the lens protective frame 103 and the mobile phone lens avoidance hole 1012 of the mobile phone have an interference fit.

In some embodiments, a first locating groove 1015 surrounding the mobile phone lens avoidance hole 1012 is provided on the side of the mobile phone case body 101 opposite the storage slot 1011. The lens protective frame 103 is positioned to the first locating groove 1015, thereby enhancing the structural stability of the lens protective frame 103 and preventing it from moving relative to the mobile phone case body 101. Moreover, the area surrounding the mobile phone lens avoidance hole 1012 as a recessed first locating groove 1015 helps prevent the edges of the mobile phone lens avoidance hole 1012 from protruding due to manufacturing variations. This prevents the edges of the mobile phone lens avoidance hole 1012 from rising above the printing surface 1020 during the printing process.

In some embodiments, the printing surface 1020 of the printing section 1019 is used for adhering printing ink. In these embodiments, the printing section 1019 is manufactured from the materials such as PVC or PC, and is installed onto the mobile phone case body 101 via adhesive bonding or snap-fit structures, or is integrally molded with the mobile phone case body 101. However, In the other embodiments, the printing section 1019 is an ink layer directly applied to the mobile phone case body 101. In some embodiments, the side of the mobile phone case body 101 opposite the receiving slot 1011 is further provided with a second locating groove 1016. The printing section 1019 is bonded in the second locating groove 1016, or the printing section 1019 is snap-fitted into the second locating groove 1016. In the present embodiment, the printing section 1019 adheres to the second locating groove 1016 via a colloidal layer, achieving stable fixation of the printing section 1019, and the second location slot 1016 prevents the printing section 1019 from sliding, thereby enhancing bonding stability. In the other embodiments, the printing section 1019 is installed in the second locating slot 1016 via a snap-fit method. For example, the printing section 1019 is interference-fit with the second locating groove 1016, or the inner side of the second locating groove 1016 is provided with a snap-fit groove, with the printing section 1019 snap-fitting into the snap-fit groove, thereby facilitating the installation and replacement of the printing section 1019. However, the installation method of the printing section 1019 is not limited to these embodiments. In the other embodiments, the skilled in the art select other suitable installation methods based on this application. For example, the printing section 1019 is integrally injection molded with the mobile phone case body 101.

In some embodiments, a mounting slot 1017 is provided on the side of the mobile phone case body 101 opposite the storage slot 1011. A magnetic part 1018 is positioned in the mounting slot 1017, and the printing section 1019 covers both the mounting slot 1017 and the magnetic part 1018.The Magnetic part 1018 is magnet, iron pieces, etc. When wireless charging is required, the magnetic part 1018 facilitates the magnetic adhesion connection between the mobile phone case body 101 and the charging device. Furthermore, during storage and transportation of the mobile phone case body 101, magnetic attraction enables grasping and handling of the mobile phone case body 101. In the present embodiment, the mounting slot 1017 is provided in the second locating slot 1016.

In some embodiments, the storage slot 1011 is provided with an Identifying section 1014 corresponding to the position of the magnetic part 1018. The Identifying section 1014 indicates the position of the magnetic part 1018, facilitating users to perform appropriate operations.

### A second embodiment

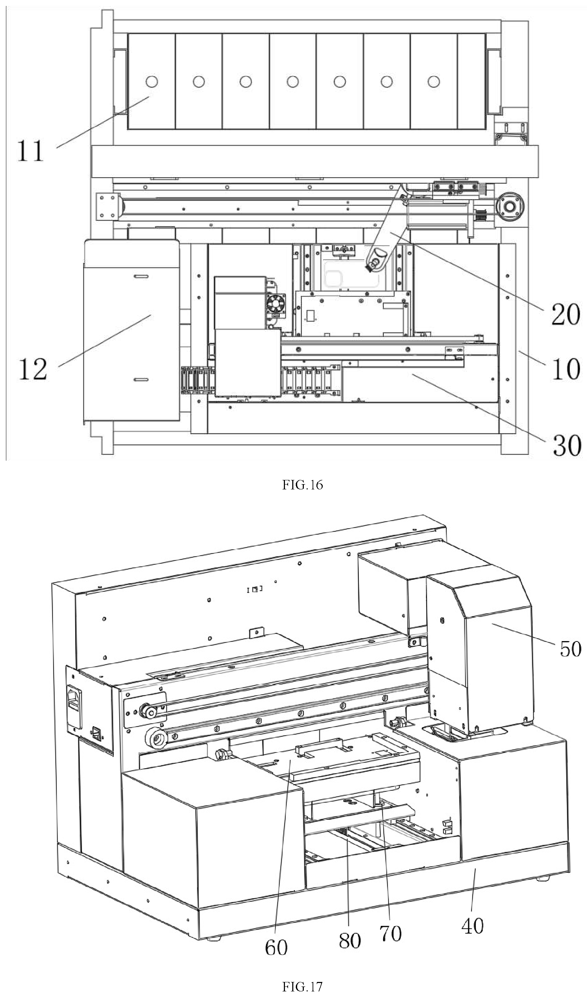

Referring to FIG.16 and FIG.17, a mobile phone case customized unmanned vending apparatus for the mobile phone case assembly is provided, including: a mobile phone case customized unmanned vending machine, and the mobile phone case assembly in the above first embodiment. The mobile phone case customized unmanned vending machine includes: a base frame 10, a mobile phone case storage and conveying mechanism 20 and a mobile phone case printing device 30. The base frame 10 is provided with a plurality of bins 11, each bin 11 contains the corresponding model of the mobile phone case assembly. The mobile phone case printing device 30 is disposed at one side of the mobile phone case storage and conveying mechanism 20, and the mobile phone case storage and conveying mechanism 20 carries the mobile phone case assemble between the bins 11 and the mobile phone case printing device 30. The mobile phone case printing device 30 includes a printing mechanism 50 and a mobile phone case shaping jig 60. The printing mechanism 50 is mounted on the base frame 10, and the mobile phone case shaping jig 60 is arranged below the printing mechanism 50 to position the mobile phone case assembly. During an operation of the mobile phone case customized unmanned vending machine, when performing custom pattern printing on the mobile phone case assemble, based on the model information of the mobile phone case assemble to be printed, the mobile phone case storage and conveying mechanism 20 obtains the corresponding mobile phone case assemble from the corresponding storage bin 11, and then transfers the mobile phone case assemble onto the mobile phone case shaping jig 60. The mobile phone case shaping jig 60 fixes the positions and realigns the distances of the mobile phone case assembly. Based on the image to be printed, the mobile phone case printing device 30 performs printing on the printing surface 1020 on the side of the mobile phone case body 101 opposite the storage slot 1011. After printing is complete, the user removes the lens protective frame 103 from the storage slot 1021 of the supporting shell 102 and assemble it in the mobile phone lens avoidance hole 1012 of the mobile phone case body 101.

The mobile phone case customized unmanned vending machine is equipped with a printing mechanism used to print on the printing surface of the mobile phone case body.

The detachable lens protective frame of the mobile phone case assembly in this application prevents the lens protective frame from interfering with the movement of the printing head in the printing device. By configuring the lens protective frame to be detachable, the lens protective frame is separated from the mobile phone case body before printing and placed in the storage slot of the supporting shell. During printing, since the lens protective frame is not mounted on the mobile phone case body, it prevented the lens protective frame from interfering with the printing head of the printing device from approaching the printing surface. Additionally, the supporting shell is used to support the mobile phone case body, ensuring that the mobile phone case body does not deform during transportation. The lens protective frame is stored in the storage slot in the mobile phone case body, which makes it convenient for users to install the lens protective frame after they have obtained the printed mobile phone case body. This also facilitates production, packaging and transportation. After printing the mobile phone case, the lens protective frame is removed from the supporting shell and installed in the mobile phone lens avoidance hole of the mobile phone case body to form a complete mobile phone case.

In some embodiments, the mobile phone case customized unmanned vending machine includes: the base frame10, the mobile phone case storage and conveying mechanism 20 and the mobile phone case printing device 30.

The base frame 10 is provided with a plurality of bins 11, each bin 11 contains the corresponding model of the mobile phone case assembly. In some embodiments, the mobile phone case is a conventional mobile phone case, or the mobile phone case assembly with an internal supporting shell as described in the first embodiment. The following will not be elaborated further. They are all referred to as mobile phone cases.

The mobile phone case printing device 30 is disposed at one side of the mobile phone case storage and conveying mechanism 20, and the mobile phone case storage and conveying mechanism 20 carries the mobile phone case assemble between the bins 11 and the mobile phone case printing device 30.

In order to facilitate the installation of the mobile phone case printing device 30, the base frame 10 is further provided with a supporter 40, the supporter 40 is detachably connected with the base frame 10, and the mobile phone case printing device 30 is arranged on the supporter 40, so that the mobile phone case printing device 30 and the supporter 40 form a modularized design, facilitating production assembly and subsequent disassembly, maintenance, replacement. The mobile phone case printing device 30 includes the printing mechanism 50, the mobile phone case shaping jig 60, a height adjustment mechanism 70 and a conveying mechanism 80.

The printing mechanism 50 is provided on the supporter 40 for printing on the mobile phone case.

The mobile phone case shaping jig 60 is arranged below the printing mechanism 50 for positioning the mobile phone case.

The height adjustment mechanism 70 is connected to the mobile phone case shaping jig 60 in a driving manner, and the height adjustment mechanism 70 drives the mobile phone case shaping jig 60 to lift so that the mobile phone case on the mobile phone case shaping jig 60 is at a preset height relative to the printing mechanism 50.

The operational principles of The mobile phone case customized unmanned vending machine is as following: after the mobile phone case storage and conveying mechanism 20 takes the mobile phone case out of the bin 11, the mobile phone case is placed on the mobile phone case shaping jig 60, the mobile phone case shaping jig 60 positions the mobile phone case, and the height adjustment mechanism 70 adjusts the height of the mobile phone case shaping jig 60, so that the mobile phone case is at a preset height suitable for the printing mechanism 50 to print. After the printing is completed, the mobile phone case storage and conveying mechanism 20 takes the mobile phone case out of the mobile phone case shaping jig 60, and carries the mobile phone case to a proper position, so that the user is able to take the printed mobile phone case.

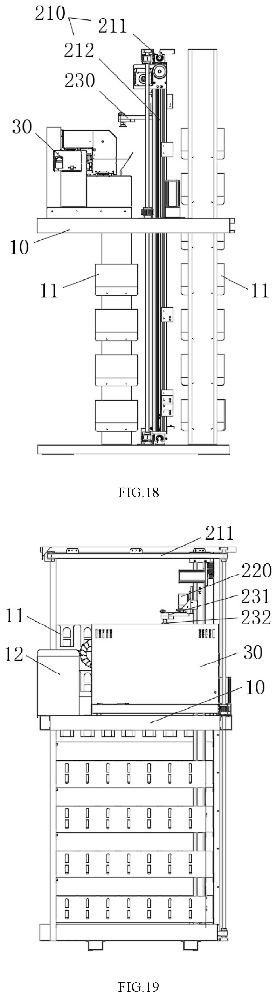

Referring to FIG. 18 and FIG. 19, in some embodiments, the mobile phone case storage and conveying mechanism 20 includes a multi-axis translational driving unit 210, a rotational drive unit 220, and a suction unit 230.

The multi-axis translational driving unit 210 is connected to the suction unit 230 in a driving manner, and is used to drive suction unit 230 to translate.

The rotational drive unit 220 is connected to the suction unit 230 in a driving manner, and is used for driving the suction unit 230 to rotate to two sides of the multi-axis translational driving unit 210.

The suction unit 230 is used to grasp the mobile phone case.

A plurality of bins 11 are arranged on two sides of the multi-axis translational driving unit 210, in which a part of the bins 11 and the mobile phone case printing device 30 are located on the same side of the multi-axis translational driving unit 210, and another part of the bins 11 are located on opposite sides of the multi-axis translational driving unit 210 relative to the mobile phone case printing device 30.

The multi-axis translational driving unit 210 drives the suction unit 230 to move to one side of any bin 11, then the rotational drive unit 220 drives the suction unit 230 to rotate towards the bin 11, so that the suction unit 230 moves to the outlet of the bin 11, the suction unit 230 is able to enter the bin 11 under the driving of the rotational drive unit 220 or the multi-axis translational driving unit 210, the suction unit 230 adsorbs the mobile phone case positioned in the bin 11, the mobile phone shell is grabbed, and then the suction unit 230 correspondingly departs from the bin 11 under the driving of either the rotational drive unit 220 or the multi-axis translational driving unit 210. The mobile phone case is stably adsorbed through the suction unit 230, stable grabbing is realized, the suction unit 230 is driven by the multi-axis translational driving unit 210 and the rotational drive unit 220 to flexibly move, the mobile phone case is conveniently taken, and a plurality of bins 11 is arranged.

Because the suction unit 230 is able to move to two sides of the multi-axis translational driving unit 210 under the driving of the rotational drive unit 220, in some embodiments, the bins 11 are arranged at two sides of the multi-axis translational driving unit 210, and the arrangeable space of the bins 11 is increased, so the number of the mobile phone cases is increased, and the structure is more compact.

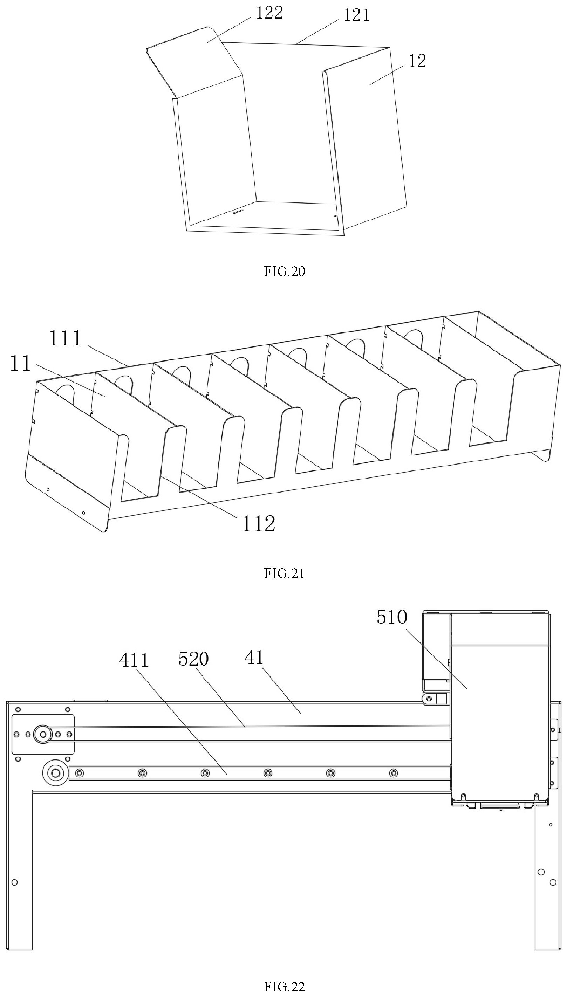

Referring to FIG.20, in some embodiments, a discharging box 12 is disposed on the base frame 10, the discharging box 12 and the mobile phone case printing device 30 are disposed on the same side of the mobile phone case storage and conveying mechanism 20, a feed bin opening 121 is disposed on the top of the discharging box 12.The mobile phone case storage and conveying mechanism 20 carries the mobile phone cases among the bins 11, the printing mechanism 50 and the discharging box 12. Because the mobile phone case printing device 30 and the discharging box 12 occupy a relatively small area, the available space for arranging the bins 11 is increased by adding the bins 11 on both sides of the multi-axis translational driving unit 210, which enhances the capacity for storing the mobile phone cases and also makes the structure more compact. After printing is completed, the mobile phone case storage and conveying mechanism 20 takes the mobile phone case off the mobile phone case shaping jig 60, conveys the mobile phone case to the position above the discharging box 12, and puts down the mobile phone case so that the mobile phone case falls into the discharging box 12 from the feed bin opening 121, and the user takes out the printed mobile phone cases from the discharge box 12. In this embodiment, on one side of the discharge box 12, there is a take-out port for users to insert their hands.

In some embodiments, the side of the feed bin opening 121 facing the multi-axis translational driving unit 210 is provided with a inclined guide plate 122, the inclined guide plate 122 is gradually inclined downwards in a direction away from the multi-axis translational driving unit 210, the suction unit 230 moves to above the inclined guide plate 122 under the driving of the multi-axis translational driving unit 210 and the rotational drive unit 220. The suction unit 230 then releases the grabbed mobile phone case, which falls onto the inclined guide plate 122. The inclined guide plate 122 guides the mobile phone case through the feed bin opening 121 and into the discharging box 12. Users take out the mobile phone case from the discharging box 12. The inclined guide plate 122 facilitates the mobile phone case to move away from the multi-axis translational driving unit 210 and then enter the discharging box 12, so that other structures of the discharging bin 1214 except the inclined guide plate 122 is arranged at a position far away from the multi-axis translational driving unit 210 to avoid interference with the multi-axis translational driving unit 210.

The specific structure of the multi-axis translational driving unit 210 is appropriately designed according to practical needs. For example, in some embodiments, the multi-axis translational driving unit 210 includes a first translational drive assembly 211 and a second translational drive assembly 212, where the first translational drive assembly 211 is connected to the suction unit 230 in a driving manner and is used for driving the suction unit 230 to move in a first direction, the second translational drive assembly 212 is connected to the suction unit 230 in a driving manner and is used for driving the suction unit 230 to move in a second direction, the first direction and the second direction are perpendicular to each other, and the plurality of bins 11 are arranged on at least one side of the first translational drive assembly 211. In the present embodiment, the bins 11 are arranged in a matrix in the first and second directions, so that the multi-axis translational driving unit 210 is facilitated to accurately drive the suction unit 230 to one side of the bins 11. In the present embodiment, the bin 11, the mobile phone case printing device 30 and the discharge box 12 are arranged on two sides of the first translational driving module 211, so that the space on two sides of the first translational drive assembly 211 is effectively utilized.

In some embodiments, the multi-axis translational driving unit 210 further includes a third translational drive assembly, and the third translational drive assembly is connected to the suction unit 230 in a driving manner for driving the suction unit 230 to move in a third direction, in which the first direction, the second direction, and the third direction are perpendicular to each other. When the positions of the two sides of the first translation drive assembly 211 are used for arranging the bins 11, and the printing position or the discharging position are far apart, the third translational drive assembly is added to facilitate the suction unit 230 to move to the bins 11, the printing position or the discharging position. In the present embodiment, the first direction is the front-rear direction of the base frame 10, the second direction is the up-down direction of the base frame 10, and the third direction is the left-right direction of the base frame 10, which is not limited to this example.

The specific structures of the first translational drive assembly 211, the second translational drive assembly 212, and the third translational drive assembly is designed according to actual needs. For example, the first translational drive assembly 211, the second translational drive assembly 212, and the third translational drive assembly is a lead screw driving assembly, a rotating motor translational driving assembly, a belt translational driving assembly, a cylinder translational driving assembly, or a linear motor translational driving assembly, etc. In the present embodiment, the first translational drive assembly 211 and the second translational drive assembly 212 are both belt translational driving assemblies, a first guide rail extending along a first direction, a first supporting seat slidably matched with the first guide rail, a second guide rail extending along a second direction, and a second supporting seat slidably matched with the second guide rail are disposed on the base frame 10, the first translational drive assembly 211 is disposed on the base frame 10, a belt of the first translational drive assembly 211 is connected to the first supporting seat in a driving manner, the second translational drive assembly 212 is disposed on the first supporting seat, a belt of the second translational drive assembly 212 is connected to the second supporting seat in a driving manner, the rotational drive unit 220 is disposed on the second supporting seat, and then is connected to the suction unit 230 in a driving manner, the first translational drive assemble 211 drives the first supporting seat to move so as to drive the suction unit 230 to move in the first direction, and the second translational drive assemble 212 drives the second supporting seat to move so as to drive the suction unit 230 to move in the second direction.

The specific structure of the rotational drive unit 220 is designed according to practical needs. For example, the Rotational drive unit 220 includes a rotary driving motor, and an output shaft of the rotary driving motor is connected to the suction section 230 in a driving manner.

In some embodiments, the suction unit 230 includes a rotating arm 231 and a plurality of vacuum chucks 232. The vacuum chucks 232 are mounted on the rotating arm 231. Both the multi-axis translational driving unit 210 and the rotational drive unit 220 are connected to the rotating arm 231 in a driving manner. The rotating arm 231 is able to rotate to two sides of the multi-axis translational driving assembly 210 under the driving of the rotational drive unit 220, and the length of the rotating arm 231 is designed according to practical needs, so that the vacuum chucks 232 is able to reach a proper position. The vacuum chuck 232 is connected with a negative pressure generating device, and negative pressure is formed at the vacuum chuck 232 so as to adsorb and grab the mobile phone case. In the present embodiment, the rotation arm 231 is connected to an output shaft of a rotation driving motor. Or the suction unit 230 includes a rotating arm 231 and an electromagnet unit, the electromagnet unit is arranged on the rotating arm 231, the multi-axis translational driving unit 210 and the rotational drive unit 220 are connected to the rotating arm 231 in a driving manner, the electromagnet unit achieves magnetic clamping of the mobile phone case 90. The mobile phone case 90 is provided with magnetism, or a magnetic piece is additionally arranged in the mobile phone shell 90, so that the mobile phone case 90 is adsorbed conveniently by the electromagnet unit. In the present embodiment, the suction unit 230 includes a rotating arm 231 and a plurality of vacuum chucks 232.

Referring to FIG.21, in order to facilitate the vacuum chuck 232 or the electromagnet unit to insert into the bins 11 to adsorb the mobile phone case, in some embodiments, the bin 11 is provided with a bin outlet 111 and an avoidance gap 112 for the rotating arm 231 to pass through, the avoidance gap 112 extends along the direction close to the bin outlet 111 and is communicated with the bin outlet 111, the rotating arm 231 rotates to the bin outlet 111 of the bin 11 under the drive of the rotational drive unit 220, then the multi-axis translational drive assembly 210 drives the rotating arm 231 to move towards the inside of the bin 11, at this time, the rotating arm 231 enters into the avoidance gap 112, so that one part of the rotating arm 231 is located outside the bin 11, and the other part is located in the bin 11, so that the rotating arm 231 is conveniently driven along the avoidance gap 112 to move towards the mobile phone case in the bin 11, so that the vacuum chuck 232 or the electromagnet unit accurately and stably approaches the surface of the mobile phone case, and the grabbing of the mobile phone is realized.

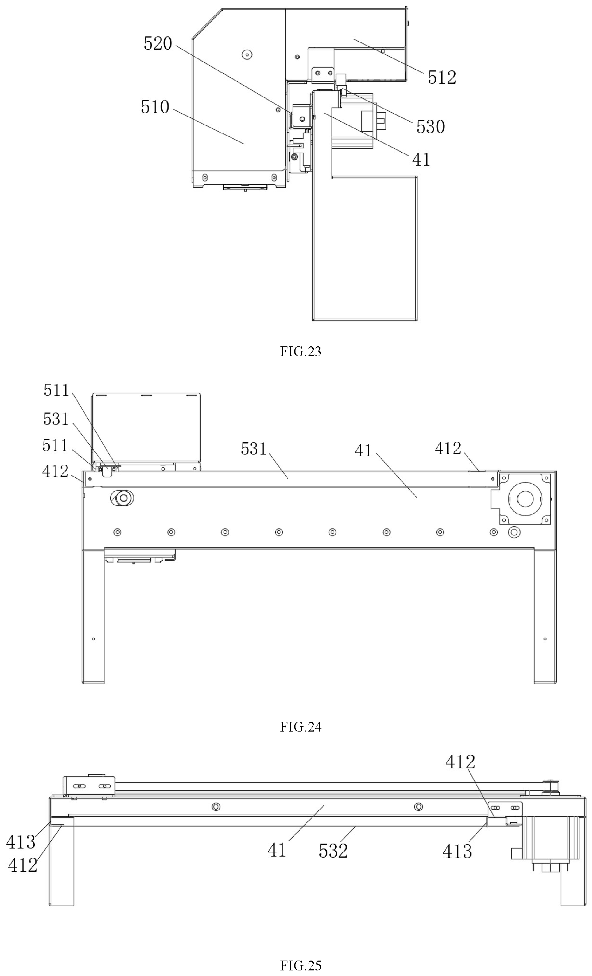

Referring to FIG.22 and FIG. 23, the specific structure of the printing mechanism 50 is appropriately designed according to practical needs. For example, the printing mechanism 50 includes: a printing head unit 510, a printing head drive unit 520, a position detection unit 530, and a support beam 41.

In the present embodiment, the support beam 41 is mounted on the base frame 10 through the supporter 40. However, when the supporter 40 is not disposed, the support beam 41 is mounted on the base frame 10 or other suitable structure on the base frame 10.

The support beam 41 is provided with a head guide rail 411.

The printing head unit 510 is movably connected with the head guide rail 411, and the printing head unit 510 and the position detection assembly 530 are respectively disposed at both sides of the support beam 41.

The printing head drive unit 520 is connected to the printing head unit 510 in a driving manner, which drives the printing head unit 510 along the head guide rail 411.

The printing head unit 510 and the position detection unit 530 are respectively arranged on two sides of the supporting beam 41, the supporting beam 41 is able to block consumable materials, so that the consumable materials sprayed out of the printing head unit 510 are prevented from being adhered to the position detection unit 530 to effectively prevent the position detection unit 530 from becoming contaminated by consumables. It also avoids the need for frequent replacement or cleaning of the position detection unit 530, thereby significantly reducing maintenance frequency.

Referring to FIG.23 to FIG.25, in some embodiments, the specific structure of the position detecting unit 530 is appropriately designed according to practical needs. For example, the position detecting unit 530 is an electro-optical distance measuring sensor assembly or an infrared distance measuring sensor assembly, etc. In the present embodiment, the position detecting unit 530 includes a grating sensor 531 and a grating strip 532, the grating sensor 531 senses the grating strip 532, the grating sensor 531 and the grating strip 532 are both disposed on one side of the support beam 41 opposite the printing head unit 510, the grating sensor 531 is connected with the printing head unit 510. Benefiting from the blocking effect of the support beam 41, it prevents consumable materials sprayed by the printing head unit 510 from adhering to the grating sensor 531 or the grating strip 532, particularly to prevent the grating strip 532 from being polluted by the consumable materials. Because the grating strip 532 is long in length and limited by the sensing distance of the grating strip 532 and the grating sensor 531, the surface of the grating strip 532 needs to be kept clean. However, in the other embodiments, the position detection unit 530 adopts other suitable structures and is not limited to the grating sensor 531 and grating strip 532.

In some embodiments, the side of the support beam 41 opposite the printing head unit 510 is provided with two grating mounting holders 412, and the grating strip 532 is mounted on the two grating mounting holders 412 with the grating sensor 531 located between the two grating mounting holders 412. The grating mounting holders 412 facilitates installation of the grating strip 532 and maintains the shape of the grating bars 532.

In some embodiments, a first limiting section 413 is provided on the grating mounting holder 412, two second limiting sections 511 are provided on the printing head unit 510, the two second limiting sections 511 are positioned on two sides of the grating sensor 531 respectively, the two second limiting sections 511 are positioned between the two first limiting section 413, the first limiting section 413 limits the corresponding second limiting section 511. When the grating sensor 531 moves to a limiting position, the first limiting section 413 and the second limiting section 511 abut against each other to limit the position of the grating sensor 531 relative to the grating strips 532.

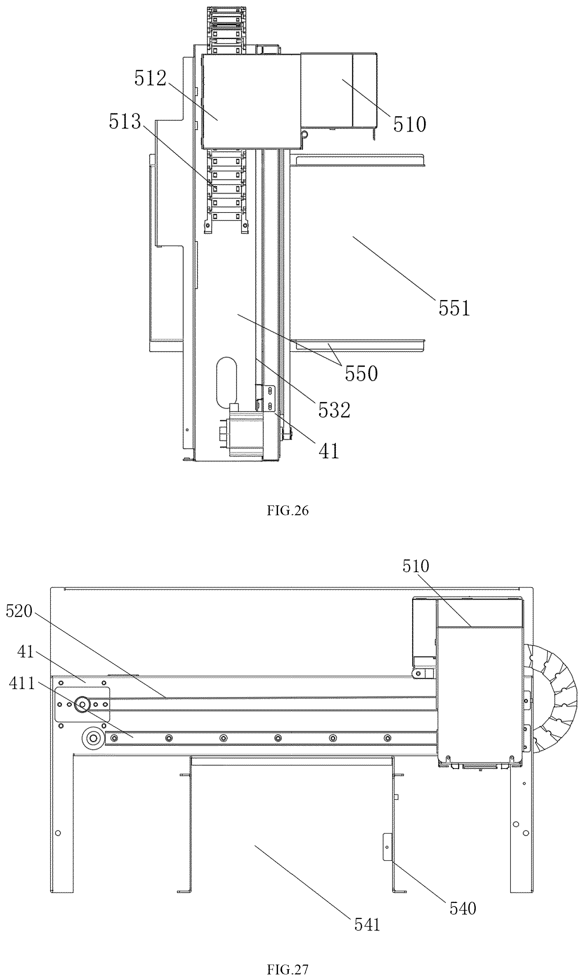

Referring to FIG.26 and FIG.27, in some embodiments, the printing mechanism 50 further includes a protective cover 540, the protective cover 540 surrounds to form a printing space 541. The printing space 541 is positioned on the side of the support beam 41 facing the printing head unit 510 and below the printing head unit 510, and the protective cover 540 is used for blocking consumable materials sprayed from the printing head unit 510, so as to further effectively prevent the consumable materials from splashing in the environment, bypassing the support beam 41 and adhering to the grating sensor 531 or the grating strip 532.The printing position is located in the printing space 541, and the loading position is located outside the printing space 541 or inside the printing space 541.

In some embodiments, portions of the protective cover 540 are disposed on the side of the support beam 41 opposite the printing head unit 510 and below the grating sensor 531 and grating strip 532. Since the printing space 541 is located on the side of the support beam 41 facing the printing head unit 510 and below the printing head unit 510, the splattered consumable materials primarily disperse from beneath the support beam 41. By using the protective cover 540 to shield the bottom of the grating sensor 531 and the grating bars 532, it cooperates with the supporting beam 41 to further prevent the consumable materials from coming into contact with the grating sensor 531 and the grating bars 532.

In some embodiments, both the head guide rail 411 and the printing head drive unit 520 are disposed on the side of the support beam 41 facing the printing head unit 510, thereby providing sufficient space for the layout of the grating sensor 531 and the grating strip 532.

To facilitate the mounting of the grating sensor 531 or grating strip 532, in some embodiments, an extension section 512 is provided on the printing head unit 510, the extension section 512 extending from above the support beam 41 to the side of the support beam 41 opposite the printing head unit 510, and the grating sensor 531 or grating strip 532 is mounted on the extension section 512, thereby facilitating the connection of the grating sensor 531 or grating strip 532 to the printing head unit 510. In the present embodiment, the grating sensor 531 and the second limiting section 511 are disposed at the bottom of the extension section 512, and the grating strip 532 is disposed at the side of the support beam 41 opposite the printing head unit 510.

In addition, due to the blocking of the extension section 512, consumable materials are further prevented from contacting the grating sensor 531 and the grating strip 532. In the present embodiment, the extension section 512 is located above the grating sensor 531 and the grating strip 532, and the part of the protective cover 540 is located below the grating sensor 531 and the grating strip 532, and the support beam 41 is located at one side of the grating sensor 531 and the grating strip 532 facing the printing head unit 510, so that consumable materials are blocked in three directions, and the consumable materials are effectively prevented from contacting the grating sensor 531 and the grating strip 532.

In some embodiments, the extension section 512 is connected with a towing chain 513, the towing chain 513 is located on the side of the support beam 41 opposite the printing head unit 510, and the d towing chain 513 is used for protecting pipes and wires such as cables, oil pipes, air pipes, etc. Since the towing chain 513 is disposed on the side of the support beam 41 opposite the printing head unit 510, consumable materials are prevented from adhering to the towing chain 513 and the pipes or wires positioned on the towing chain 513, so that the towing chain 513 operates smoothly while protecting the pipes and wires.

The specific structure of the head guide rail 411 is appropriately designed according to practical needs. For example, the head guide rail 411 is a convex rail, and the printing head unit 510 is slidingly matched with the convex rail through a sliding block, which is not limited to this example.

The specific structure of the printing head drive unit 520 is appropriately designed according to practical needs. For example, the printing head drive unit 520 is a lead screw driving assembly, a rotary motor translation driving assembly, a belt translation driving assembly, a cylinder translation driving assembly, a linear motor translation driving assembly, or the like. In the present embodiment, the printing head drive unit 520 is a belt translational driving assembly, the belt structure is disposed on the side of the support beam 41 facing the printing head unit 510, and the belt driving motor is disposed on the side of the support beam 41 opposite the printing head unit 510 and is connected to the belt structure in a driving manner, and the belt structure transmits power to the printing head unit 510.

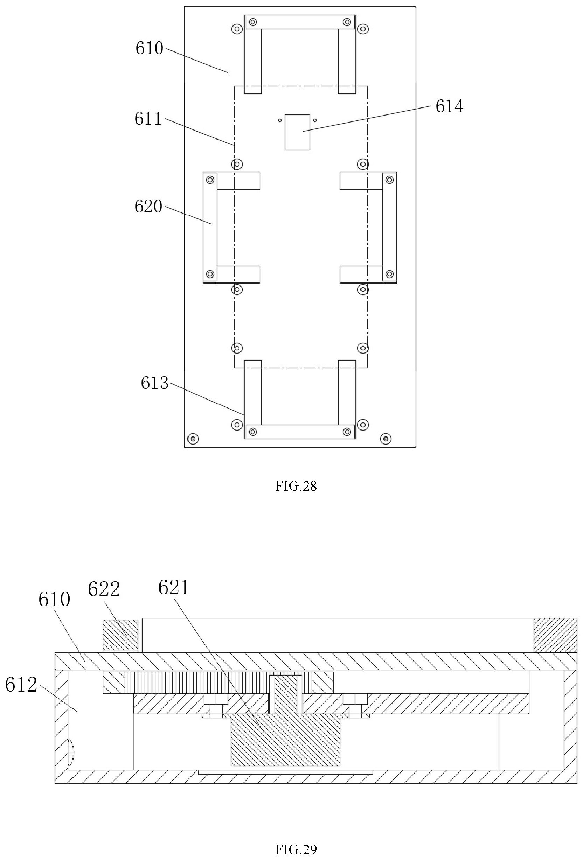

Referring to FIG.28 and FIG.29, the specific structure of the mobile phone case shaping jig 60 is appropriately designed according to practical needs. For example, the mobile phone case shaping jig 60 includes: a mobile phone case shaping seat 610 and a position unit 620.

The position unit 620 is disposed on the mobile phone case shaping seat 610 to push the mobile phone case 90 to move to a shaping position 611 preset on the mobile phone case shaping seat 610.

The position unit 620 includes a positioning drive unit 621 and four positioning parts 622. The four positioning parts 622 are disposed on the mobile phone case shaping seat 610 and are located on four sides of the shaping position 611 respectively.

The positioning drive unit 621 drives the positioning parts 622 positioned on two adjacent sides of the shaping position 611 to move relative to the mobile phone case shaping seat 610, or the positioning drive unit 621 drives the positioning parts 622 positioned on three adjacent sides of the shaping position 611 to move relative to the mobile phone case shaping seat 610, or the positioning drive unit 621 drives the four positioning parts 622 to move relative to the mobile phone case shaping seat 610, so that the corresponding positioning parts 622 are close to or far from the shaping position 611. When the positioning is complete, the four positioning parts 622 are correspondingly positioned to the sides of the shaping position 611, thereby limiting the mobile phone case 90 within the shaping position 611. The positioning drive unit 621 drives the mobile phone case shaping seat 610 to move so as to make the positioning part 622 approach or far from the shaping seat, or drives the positioning part 622 to move toward the shaping seat so as to make the positioning part 622 approach or far from the shaping position 611. In the present embodiment, the positioning drive unit 621 is connected to the positioning parts 622 in a driving manner. The positioning parts 622 driven by the positioning drive unit 621 are movable positioning parts 6221. In some embodiments, a structure of a fixed positioning members 6222 and the movable positioning part 6221 is different to meet structural design requirements.

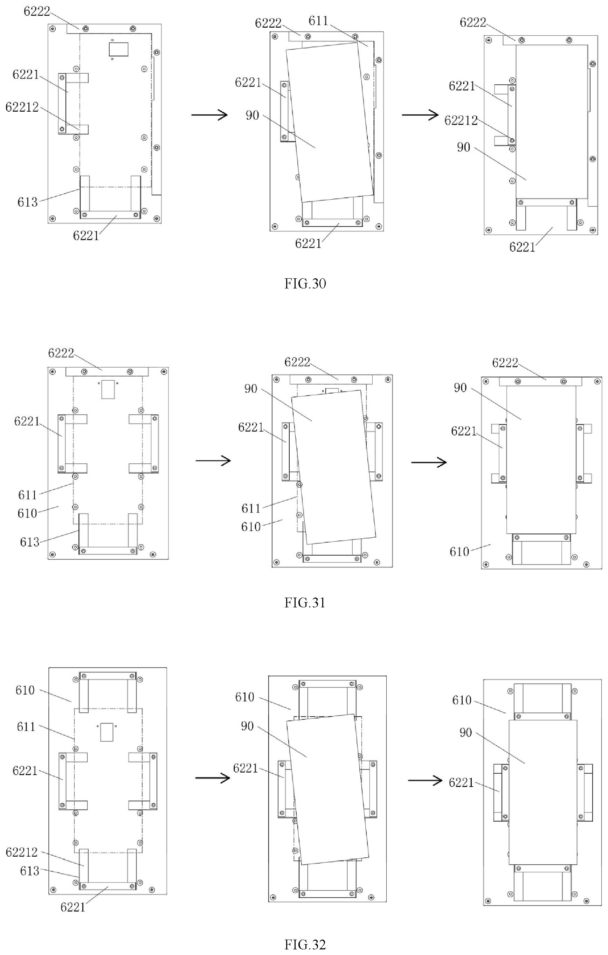

Referring to FIG.30, in the first positioning manner: the positioning driving unit 621 drives the positioning part 622 located at two adjacent sides of the shaping position 611 to move relative to the mobile phone case shaping seat 610, in which two positioning parts 622 are the fixed positioning parts 6222, the fixed positioning parts 6222 are fixed relative to the mobile phone case shaping seat 610, the fixed positioning parts 6222 are fixed on the mobile phone case shaping seat 610, and the fixed positioning parts 6222 are correspondingly arranged at the side edges of the shaping position 611 so as to position the mobile phone shell 90, and the other two positioning parts 622 are the movable positioning parts 6221. After the mobile phone case 90 is placed on the mobile phone case shaping seat 610, the positioning driving unit 621 drives the movable positioning parts 6221 to move, so that the movable positioning parts 6221 move towards the shaping position 611 until the movable positioning parts 6221 push the mobile phone case 90 towards the shaping position 611, and the four sides of the mobile phone case 90 respectively abut against the two fixed positioning parts 6222 and the two movable positioning parts 6221. In the present embodiment, the positioning drive unit 621 is connected to the movable positioning parts 6221 in a driving manner.

Referring to FIG.31, in the second positioning mode: the positioning drive unit 621 drives the positioning parts 622 located on three adjacent sides of the shaping position 611 to move relative to the mobile phone case shaping seat 610, in which one of the positioning parts 622 is a fixed positioning part 6222, the fixed positioning part 6222 is fixed relative to the mobile phone case shaping seat 610, the fixed positioning part 6222 is fixed on the mobile phone case shaping seat 610, and the fixed positioning part 6222 is correspondingly arranged on a side edge of the shaping position 611 so as to position the mobile phone shell 90, and the other three positioning members 622 are the movable positioning parts 6221. After the mobile phone case 90 is placed on the mobile phone case shaping seat 610, the positioning drive unit 621 drives the movable positioning parts 6221 to move, so that the movable positioning parts 6221 move towards the shaping position 611 until the movable positioning parts 6221 pushes the mobile phone case 90 towards the shaping position 611, and the four sides of the mobile phone case 90 respectively abut against the fixed positioning part 6222 and the three movable positioning parts 6221 to achieve the positioning of the mobile phone case 90.

Referring to FIG.32, in a third positioning mode: the positioning drive unit 621 drives the positioning parts 622 located on four sides adjacent to the shaping position 611 to move relative to t the mobile phone case shaping seat 610, and the four positioning parts 622 are all the movable positioning parts 6221. After the mobile phone case 90 is placed on the mobile phone case shaping seat 610, the positioning drive unit 621 drives the four movable positioning parts 6221 to move, so that the positioning parts 622 move towards the shaping position 611 until the movable positioning parts 6221 push the mobile phone case 90 towards the shaping position 611, and the four sides of the mobile phone case 90 respectively abut against the four movable positioning parts 6221.

In some embodiments, the sides of any two adjacent positioning parts 622 for positioning the mobile phone housing 90 are perpendicular to each other. When the mobile phone case 90 is inclined relative to the side of the positioning part 622 for positioning the mobile phone case 90, with the side surface of the positioning part 622 abutting the mobile phone case 90, pushing the mobile phone case 90 into the shaping position 611 drives the mobile phone case 90 to gradually align with the side edge corresponding to the shaping position 611, so that the mobile phone case 90 is accurately positioned.

In the present embodiment, the positioning drive unit 621 is connected to the positioning parts 622 with a driving manner, in which the positioning parts 622 connected with the positioning drive unit 621 are the movable positioning parts 6221, and the movable positioning parts 6221 are movably connected with the mobile phone case shaping seat 610 and is relatively movable with the mobile phone case shaping seat 610.

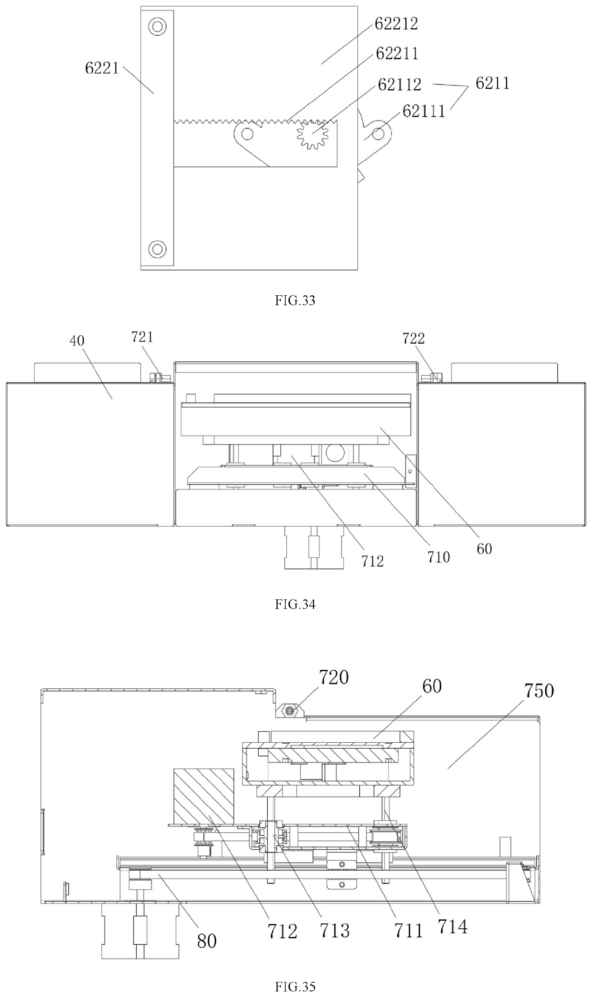

Referring to FIG. 29 and FIG.33, in some embodiments, the positioning drive unit 621 further includes a plurality of positioning power units 6211, the positioning power units 6211 are connected to the movable positioning parts 6221 in a driving manner, the positioning power units 6211 drive the movable positioning parts 6221 toward or far away from the shaping position 611. The positioning power unit 6211 correspondingly drives the movable positioning part 6221 to move, so that the movable positioning part 6221 is able to controlled accurately. However, in other embodiments, based on the quantity of positioning parts 6221, for example, the positioning driving assembly 621 include only one positioning power unit 6211 when the number of movable positioning parts 6221 is two, the positioning power unit 6211 is able to drive the two movable positioning parts 6221 to move at the same time, thereby reducing the structural complexity; Or the positioning driving unit 621 includes two positioning power unit 6211 when the number of movable positioning parts 6221 is three, in which one positioning power unit 6211 is connected to one movable positioning part 6221 with a driving manner and the other positioning power unit 6211 is connected to two movable positioning parts 6221 with a driving manner; Or the positioning driving unit 621 includes two positioning power units 6211 when the number of movable positioning parts 6221 is four, and the positioning power units 6211 are connected to two movable positioning parts 6221 with a driving manner.

Referring to FIG.33, a specific structure of the positioning power unit 6211 is appropriately designed according to practical needs. For example, in some embodiments, the positioning power unit 6211 includes a positioning drive motor 62111 and a positioning transmission gear 62112, the positioning drive motor 62111 is connected to the positioning transmission gear 62112 with a driving manner, the movable positioning part 6221 is provided with a rack section 62211, the positioning transmission gear 62112 is meshed with the rack section 62211, the positioning drive motor 62111 drives the positioning transmission gear 62112 to rotate, and the positioning transmission gear 62112 drives the movable positioning part 6221 to move through the rack section 62211. However, the positioning power unit 6211 also adopts a lead screw driving assembly, a rotary motor translational driving assembly, a belt translational driving assembly, a cylinder translational driving assembly, or a linear motor translational driving assembly etc., which is not limited to this example.

In some embodiments, the movable positioning part 6221 is moved in a direction perpendicular to its side for positioning the mobile phone case 90, the second positioning part 622 is moved in a direction perpendicular to its side for positioning the mobile phone case 90, thereby facilitating mating with the side of the mobile phone case 90, so that the mobile phone case 90 is stably positioned.

In order to facilitate the installation of the positioning drive unit 621, to avoid the positioning drive unit 621 from being affected by dust and impurities etc. in the environment, in some embodiments, the mobile phone case shaping seat 610 is further provided with an installation cavity 612 and a plurality of guide slots 613, the plurality of guide slots 613 are arranged around the shaping position 611 and are communicated with the installation cavity 612. The positioning drive unit 621 is arranged in the installation cavity 612, the movable positioning part 6221 slides in the guiding through grooves 613. A part of the movable positioning part 6221 extends into the installation cavity 612 and is connected to the positioning drive unit 621 with a driving manner, and the guide slot 613 guides the movable positioning part 6221 to stably slide, so that the movement stability of the movable positioning part 6221 is improved.

In some embodiments, the movable positioning part 6221 is provided with a shielding plate 62212, the shielding plate 62212 is located in the installation cavity 612, the shielding plate 62212 seals at least part of the guide slot 613, the shielding plate 62212 moves along with the movable positioning part 6221, and when the mobile phone case 90 is not positioned, the shielding plate 62212 prevents impurities such as dust in the environment from entering the installation cavity 612 from the guide slot 613, thereby improving the protection of the positioning drive unit 621. In the present embodiment, the rack section 62211 is provided on the shielding plate 62212.

In some alternative embodiments, the mobile phone case shaping seat 610 is provided with a mobile phone case detection unit 614, where the mobile phone case detection unit 614 faces the shaping position 611 and is connected to a positioning drive unit 621 via a signal. The mobile phone case detection unit 614 is configured to detect whether the mobile phone case 90 is placed at the shaping position 611. When the mobile phone case detection unit 614 detects the mobile phone case 90, the mobile phone case detection unit 614 sends a positioning signal to the positioning drive unit 621, and then the position unit 620 positions the mobile phone case 90.In some embodiments, the mobile phone case detection unit 614 is a photoelectric sensor, an infrared sensor, an ultrasonic sensor, a proximity switch, etc., and the detection method of the photoelectric sensor, the infrared sensor, the ultrasonic sensor, the proximity switch, etc. are well known to those skilled in the art, and will not be described herein.

Referring to FIG.34 and FIG.35, in some embodiments, the height adjustment mechanism 70 includes:

A lifting drive unit 710, which is connected to the mobile phone case shaping jig 610 with a driving manner and is used for driving the mobile phone case shaping seat 610 of the mobile phone case shaping jig 60 to lift.

A height detection unit 720, which is used for detecting whether the mobile phone case 90 reaches a preset height. The height detection unit 720 is disposed at one side of the mobile phone case shaping jig 60 and is connected to the lifting drive unit 710 via a signal. The height of the mobile phone case shaping seat 610 is adjusted through the lifting drive unit 710 to adjust the height of the mobile phone shell 90. Whether the mobile phone shell 90 reaches the preset height is judged through the height detection unit 720. After the lifting drive unit 710 drives the mobile phone case shaping seat 610 to lift so that the mobile phone case 90 reaches the preset height, the mobile phone case 90 is printed by the printer mechanism, the height of the mobile phone shell shaping seat 610 is adjusted through the lifting drive unit 710 so as to adapt to thickness differences of different mobile phone cases 90, the effect of printing is prevented from being influenced by thickness differences of different mobile phone cases 90, the whole structure is simpler, and the cost is lower.

It should be noted that, when the mobile phone case 90 is at the preset height, the distance between the top surface of the mobile phone case 90 and the printing mechanism 50 enables the printing mechanism 50 to perform effective printing, and the top surface of the mobile phone case 90 is not far away from or near to the printing mechanism 50 so as to affect the printing effect, and the printing mechanism 50 does not collide with the mobile phone case 90.

In some embodiments, the mobile phone case printing device 30 further includes a conveying mechanism 80. The conveying mechanism 80 is disposed on the supporter 40 and is connected to the height adjustment mechanism 70 in a driving manner, and drives the height adjustment mechanism 70 to move to the loading position and the printing position relative to the printing mechanism 50.

Through the conveying mechanism 80 moves the high adjustment mechanism 70 as a whole to the loading position keeping away from the printing mechanism 50, facilitating the placement of the mobile phone case 90 onto the mobile phone case shaping seat 610. This prevents the printing mechanism 50 from obstructing the placement process of the mobile phone case 90. After the mobile phone 90 is placed, the conveying mechanism 80 carries the mobile phone case 90 to the printing position beneath the printing mechanism 50, enabling printing on the mobile phone case 90. In the present embodiment, the printing position and the loading position are sequentially arranged in the direction close to the mobile phone case storage and conveying mechanism 20. This facilitates the rapid placement of the mobile phone case 90 onto the mobile phone case shaping jig 60 by the mobile phone case storage and conveying mechanism 20, thereby shortening the movement path of the mobile phone cases 90.

When the conveying mechanism 80 drives the height adjustment mechanism 70 to move from the loading position to the printing position, the height of the mobile phone case 90 is adjusted. When the height detection unit 720 detects that the mobile phone case 90 at the preset height, the lifting drive unit 710 drives the mobile phone case shaping jig 60 to slowly descend until the height detection unit 720 does not detect the mobile phone case 90 is at the preset height, the mobile phone case shaping jig 60 stops descending immediately, so that the top surface of the mobile phone case 90 is just at the preset height. When the height detection unit 720 does not detect the mobile phone case 90 at the preset height, the lifting drive unit 710 drives the mobile phone case shaping jig 60 to ascend until the height detection unit 720 detects the mobile phone casing 90 is at the preset height, and then the lifting drive unit 710 drives the mobile phone case shaping jig 60 to slowly descend until the height detection unit 720 just does not detect the mobile phone case 90 is at the preset height, the mobile phone case shaping jig 60 stops descending immediately, so that the top surface of the mobile phone case 90 is just at the preset height.

The specific manner in which the height detection unit 720 determines whether the height of the mobile phone case 90 reaches the preset height is appropriately designed according to practical needs. For example, in some embodiments, the height detection unit 720 includes a light emitter 721 and a light receiver 722. The light emitter 721 and the light receiver 722 are disposed on two sides of the mobile phone case shaping jig 60. The light emitter 721 is selected from different types, such as an infrared light emitter 721, a visible light emitter 721, and so on. In the present embodiment, the light emitter 721 is a laser transmitter, the light receiver 722 is a laser receiver, and the laser transmitter and the laser receiver are arranged at the preset height and are positioned between the loading position and the printing position, and are used for detecting whether the mobile phone case 90 is at the preset height in real time. The laser receiver judges whether the mobile phone case 90 is or is not by detecting laser emitted by the laser transmitter, and further judges whether the mobile phone case 90 exceeds the preset height. When the laser receiver does not receive the laser emitted by the laser transmitter, it indicates that the mobile phone case 90 is detected, the mobile phone case 90 exceeds the preset height, the laser transmitter sends a signal to the lifting drive unit 710, the lifting drive unit 710 drives the mobile phone case shaping jig 60 to slowly descend until the laser receiver receives laser emitted by the laser transmitter, the lifting drive unit 710 stops descending immediately. At this moment, the mobile phone case 90 is not detected, meaning the mobile phone case 90 is precisely at the preset height. When the laser receiver receives the laser emitted by the laser transmitter, it indicates that the mobile phone case 90 is not detected, the mobile phone case 90 is lower than the preset height, the laser transmitter sends a signal to the lifting drive unit 710, the lifting drive unit 710 drives the mobile phone case shaping jig 60 to ascend until the laser receiver no longer receives laser emitted. At this moment, the mobile phone case 90 exceeds the preset height, the laser transmitter sends a signal to the lifting drive unit 710, the lifting drive unit 710 drives the mobile phone case shaping jig 60 to slowly descend until the laser receiver receives laser emitted by the laser transmitter. That is, when the mobile phone case 90 is not detected, the lifting drive unit 710 immediately stops descending immediately. At this moment, the mobile phone case 90 is precisely at the preset height. In some embodiments, the conveying mechanism 80 and the height adjustment mechanism 70 are operate simultaneously. That is, during the process where the conveying mechanism 80 moves the height adjustment mechanism 70 from the loading position to the printing position, the height adjustment mechanism 70 simultaneously adjusts the height of the mobile phone case 90, thereby improving work efficiency.

Or in the other embodiments, the height detection unit 720 includes a distance sensor disposed above the mobile phone shaping seat and facing the top of the mobile phone shaping seat. The distance sensor faces the mobile phone case 90 on the mobile phone case shaping jig 60, and determines whether the mobile phone case 90 reaches the preset height correspondingly by detecting the distance between the mobile phone case 90 and the distance sensor. The distance sensor employs different detection modes, such as a proximity switch, an infrared distance measurement sensor, etc., and is not limited to this example.

Or in the other embodiments, the height detection unit 720 includes a thickness measuring sensor. The thickness measuring sensor is disposed on one side of the mobile phone case shaping jig 60, and detects the thickness of the mobile phone case 90. Since the area to be printed of the mobile phone case 90 is usually located at the top of the mobile phone case 90, subtracting the thickness of the mobile phone case 90 from the preset height is able to obtain the height required to be raised by the mobile phone case shaping jig 60, so that the mobile phone case shaping jig 60 is raised until the mobile phone case 90 reaches the preset height.

Or in the other embodiments, the height detection unit 720 includes a contact sensor. Determine whether the mobile phone case has reached the preset height by determining whether the mobile phone case is in contact with the contact sensor at the preset height.

Or in the other embodiments, the height detection unit 720 includes a mobile phone case height calculating unit connected to the lifting drive unit 710 via a signal. The height of the mobile phone case shaping seat 610 is driven by the lifting drive unit 710 and the current height of the mobile phone case shaping seat 610 are calculated in real time. For example, when the lifting drive unit 710 uses a motor as power, the current height of the mobile phone case shaping seat 610 is determined in real time through operation data of the motor. Since the size (length, width and thickness)of the mobile phone case 90 is able to be obtained and stored in advance, after the user selects the mobile phone case 90 with the corresponding model, the mobile phone case storage and conveying mechanism 20 carries the mobile phone case 90, and the mobile phone case height calculating unit receives the thickness information of the mobile phone case 90 selected by the user, and then based on the thickness of the mobile phone case 90 and the current height of the mobile phone case shaping seat 610, the current height of the mobile phone case 90 is measured in real time, and the lifting drive unit 710 adjusts the height of the mobile phone case shaping seat 610 based on the current height of the mobile phone case 90, so that the mobile phone case 90 reaches the preset height. In some embodiments, the mobile phone case height calculating unit employs a processor, an arithmetic circuit, or the like for realizing the calculating function.

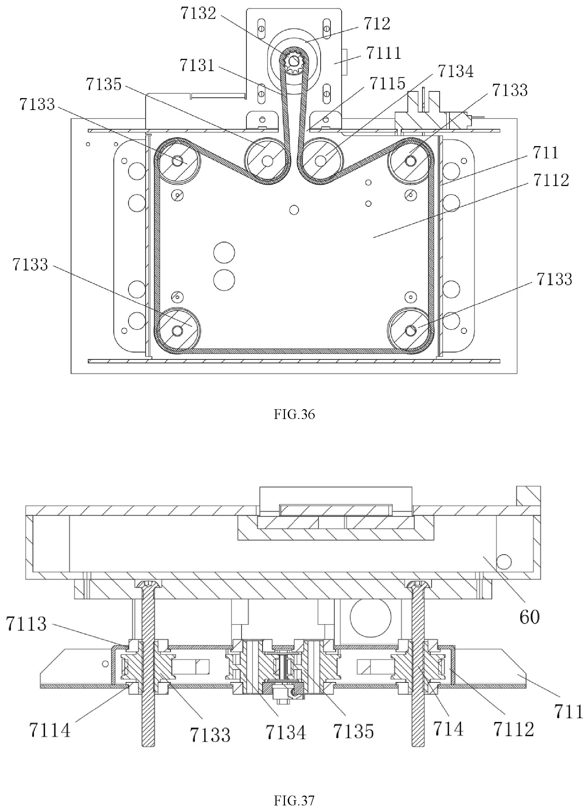

Referring to FIG.36 and FIG.37, the specific structure of the lifting drive unit 710 is appropriately designed according to practical needs. For example, in some embodiments, the lifting drive unit 710 includes a base 711, a lifting power motor 712, a lifting transmission unit 713 and a plurality of lifting lead screws 714. The plurality of lifting screws 714 are disposed on the base 711 and are connected to the mobile phone case shaping seat 610 in a driving manner, the lifting power motor 712 is connected to the height detection unit 720 via a signal. The lifting power motor 712 is connected to the plurality of lifting lead screws 714 through the lifting transmission unit 713. The lifting lead screws 714 rotate to drive the mobile phone case shaping seat 610 to lift, and the plurality of lifting lead screws 714 is able to stably drive the mobile phone case shaping seat 610 to lift and maintain the angle of the mobile phone case shaping seat 610 relative to the horizontal plane. In the present embodiment, the number of the lifting lead screws 714 is four, which are respectively near the four corners of the mobile phone case shaping seat 610, so as to be beneficial to maintaining the angle of the mobile phone case shaping seat 610 relative to the horizontal plane. However, in the other embodiments, the lifting drive unit 710 employs a rotary motor translational driving assembly, a belt translational driving assembly, a cylinder translational driving assembly, a linear motor translational driving assembly, or the like, which is not limited in this embodiment.

Referring to FIG.36 and FIG.37, the specific structure of the lifting transmission unit 713 is appropriately designed according to practical needs. For example, in some embodiments, the lifting transmission unit 713 includes a synchronous belt 7131, a driving synchronous wheel 7132 and a plurality of transmission synchronous wheels 7133. The driving synchronous wheel 7132 is connected with the output end of the lifting power motor 712, the transmission synchronous wheels 7133 are connected with the lifting lead screw 714, the synchronous belt 7131 is meshed with the driving synchronous wheel 7132 and the transmission synchronous wheels 7133. The lifting power motor 712 drives the driving synchronous wheel 7132 to rotate, the driving synchronous wheel 7132 drives the synchronous belt 7131 to move, the synchronous belt 7131 drives the transmission synchronous wheels 7133 to rotate, and the transmission synchronous wheels 7133 rotate to drive the lifting lead screw 714 to rotate, thereby realizing transmission.

In some embodiments, an installation section 7111 is provided on the base 711. The installation section 7111 extends from one side of the base 711, the lifting power motor 712 is provided on the installation section 7111, and the lifting power motor 712 is disposed on one side of the base 711, so that the thickness, the length and the width of the base 711 is reduced, and the structure is simplified.

In some embodiments, an installation cavity 7112 is provided on the base 711. A plurality of first mounting holes 7113 located at the top of the installation cavity 7112 and a plurality of second mounting holes 7114 located at the bottom of the installation cavity 7112 are provided in the installation cavity 7112. The drive synchronous wheel 7132 and the transmission synchronous wheels 7133 are rotatably provided in the installation cavity 7112, the top end of the drive synchronous wheel 7132 and the top end of the transmission synchronous wheels 7133 are correspondingly connected with the first mounting holes 7113, the bottom end of the drive synchronous wheel 7132 and the bottom end of the transmission synchronous wheels 7133 are correspondingly connected with the second mounting holes 7114. The installation cavity 7112 is beneficial to providing a certain protection for the drive synchronous wheel 7132 and the transmission synchronous wheels 7133 and being beneficial to stably assembling the drive synchronous wheel 7132 and the transmission synchronous wheels 7133. One side of the installation cavity 7112 facing the installation section 7111 is provided with an mounting opening 7115, the lifting power motor 712 is arranged on the installation portion 7111, one part of the synchronous belt 7131 is arranged in the installation cavity 7112 and meshed with the transmission synchronous wheel 7133, the other part of the synchronous belt 7131 extends out of the installation cavity 7112 from the mounting opening 7115 and meshed with the drive synchronous wheel 7132, the lifting power motor 712 is arranged outside the installation cavity 7112, and the installation cavity 7112 does not need to be designed too large.

In some embodiments, the lifting transmission unit 713 further includes a first guiding synchronous wheel 7134 and a second guiding synchronous wheel 7135, the first guiding synchronous wheel 7134 and the second guiding synchronous wheel 7135 are rotatably disposed in the installation cavity 7112 and located at one side of the mounting opening 7115. The top end of the first guiding synchronous wheel 7134 and the top end of the second guiding synchronous wheel 7135 are correspondingly connected to the first mounting hole 7113, and the bottom end of the first guiding synchronous wheel 7134 and the bottom end of the second guiding synchronous wheel 7135 are correspondingly connected to the second mounting hole 7114, thereby improving the mounting stability of the first guiding synchronous wheel 7134 and the second guiding synchronous wheel 7135. The synchronous belt 7131 in the installation cavity 7112 is sequentially engaged with the first guiding synchronous wheel 7134, the plurality of transmission synchronous wheels 7133 and the second guiding synchronous wheel 7135, so that the synchronous belt 7131 maintains tightness and simultaneously does not generate friction with the mounting opening 7115. The synchronous belt 7131 is guided to bend near the mounting opening 7115 through the first guiding synchronous wheel 7134 and the second guiding synchronous wheel 7135, the synchronous belt 7131 smoothly passes through the mounting opening 7115, and the size of the mounting opening 7115 is designed to be smaller, the protection performance of the installation cavity 7112 is improved. The synchronous belt 7131 sequentially passes through the drive synchronous wheel 7132, the first guiding synchronous wheel 7134, the plurality of transmission synchronous wheels 7133 and the second guiding synchronous wheel 7135 and then returns to the drive synchronous wheel 7132.

In some embodiments, bearings are arranged in the first mounting holes 7113 and the second mounting holes 7114, and the lifting lead screws 714 are penetrated through the bearings, so that the rotation stability of the lifting lead screw 714 is improved.

The specific structure of the conveying mechanism 80 is appropriately designed according to practical needs. For example, the conveying mechanism 80 employs a screw rod driving assembly, a rotary motor translation driving assembly, a belt translation driving assembly, a cylinder translation driving assembly or a linear motor translation driving assembly and the like. In the present embodiment, the conveyor mechanism 80 employs the synchronous belt 7131 to translate the drive unit.

In the second embodiment, the mobile phone case 90 printed by the mobile phone case customized unmanned vending apparatus described above is the mobile phone case as in the above first embodiment, or other types of mobile phone case. The working principle of the mobile phone case customized unmanned vending apparatus is the same, and is not repeated here.

## Claims

1. A mobile phone case assembly, **characterized in that**, comprising:
a mobile phone case body (101), the mobile phone case body (101) is configured with a receiving slot (1011) for holding a mobile phone, the receiving slot (1011) is provided with a mobile phone lens avoidance hole (1012), and the mobile phone lens avoidance hole (1012) extends to a side of the mobile phone case body (101) opposite the receiving slot (1011);
a lens protective frame (103), the lens protective frame (103) is detachably mounted to the mobile phone lens avoidance hole (1012) to form a flat printing surface (1020) on the side of the mobile phone case body (101) opposite the receiving slot (1011); and
a supporting shell (102), the supporting shell (102) is removably provided in the receiving slot (1011), and one or more storage slots (1021) are provided on the supporting shell (102), the lens protective frame (103) is detachably stored in the storage slot (1021).

2. The mobile phone case assembly of claim 1, **characterized in that** the mobile phone case assembly comprises at least two lens protective frames (103),any of the lens protection frames (103) is positioned at the mobile phone lens avoidance hole (1012) and is detachably mounted to the mobile phone case body (101); a plurality of storage slots (1021) are provided on the supporting shell (102), and each of the storage slots (1021) corresponds to store one of the lens protective frames (103).

3. The mobile phone case assembly of claim 1, **characterized in that** the lens protective frame (103) comprises at least one of the following:
a first protective frame (1331), a plurality of light through holes (1321) are provided on the first protective frame (1331), when the first protective frame (1331) is detachably mounted to the mobile phone case body (101), the first protective frame (1331) covers the mobile phone lens avoidance hole (1012), and the light through hole (1321) communicates with the mobile phone lens avoidance hole (1012);
a second protective frame (1033), a first avoidance frame opening (1331) is provided on the second protective frame (1033), when the second protective frame (1033) is detachably mounted to the mobile phone case body (101), the second protective frame (1033) surrounds the mobile phone lens avoidance hole (1012) with the first avoidance frame opening (1331) communicating with the mobile phone lens avoidance hole (1012);
a third protective frame (1034), a second avoidance frame opening (1341) and a protective cover (1342) are provided on the third protective frame (1034); the protective cover (1342) is movably coupled to the third protective frame (1034) and is able to move relative to the third protective frame (1034) to a position closing the second avoidance frame opening (1341) or to a position opening the second avoidance frame opening (1341), when the third protective frame (1034) is detachably mounted to the mobile phone case body (101), the second protective frame (1033) surrounds the mobile phone lens avoidance hole (1012) with the second avoidance frame opening (1341) communicating with the mobile phone lens avoidance hole (1012).
a fourth protective frame (1035), a bracket (1351) is provided on the fourth protective frame (1035), the bracket (1351) is movably mounted to the fourth protective frame (1035) and is able to move relative to the fourth protective frame (1035) to a folded position and an unfolded position, when the fourth protective frame (1035) is detachably mounted to the mobile phone case body (101), the fourth protective frame (1035) is positioned at the mobile phone lens avoidance hole (1012), and when the bracket (1351) is in the unfolded position, the bracket (1351) extends to the outside of the mobile phone case body (101) opposite to the receiving slot (1011).

4. The mobile phone case assembly of claims 1 to 3, **characterized in that** a snap groove (1031) is provided on the lens protective frame (103), and a clamping section (1013) is provided in the mobile phone lens avoidance hole (1012) extending circumferentially along the mobile phone lens avoidance hole (1012), the snap groove (1031) engages with the clamping section (1013) to enable a removable connection between the lens protective frame (103) and the mobile phone case body (101);
or, a first locating groove (1015) surrounding the mobile phone lens avoidance hole (1012) is provided on the side of the mobile phone case body (101) opposite the storage slot (1021), the lens protective frame (103) is positioned to the first locating groove (1015).

5. The mobile phone case assembly of claims 1 to 3, **characterized in that** the mobile phone case assembly further comprises a printing section (1019), the printing section (1019) is positioned on one side of the mobile phone case body (101) opposite the receiving slot (1011), a printing surface (1020) is formed on the printing section (1019), the printing surface (1020) is aligned with the side of the mobile phone case body (101) opposite the receiving slot (1011), or protrudes beyond the side of the mobile phone case body (101) opposite the receiving slot (1011).

6. The mobile phone case assembly of claim 5, **characterized in that** the lens protective frame (103) protrudes from the side of the mobile phone case body (101) opposite the receiving slot (1011), and the height of the lens protective frame (103) relative to the side of the mobile phone case body (101) opposite the receiving slot (1011) is greater than the height of the lens protective frame (103) relative to the printing surface (1020), when the lens protective frame (103) is mounted on the mobile phone case body (101).

7. The mobile phone case assembly of claim 5, **characterized in that** the side of the mobile phone case body (101) opposite the receiving slot (1011) is further provided with a second locating groove (1016), the printing section (1019) is bonded in the second locating groove (1016), or the printing section (1019) is snap-fitted into the second locating groove (1016).

8. The mobile phone case assembly of claim 5, **characterized in that** a mounting slot (1017) is provided on the side of the mobile phone case body (101) opposite the storage slot (1021), a magnetic part (1018) is positioned in the mounting slot (1017), and the printing section (1019) covers both the mounting slot (1017) and the magnetic part (1018).

9. The mobile phone case assembly of claims 1 to 3, **characterized in that** the mobile phone case body (101) is provided with a first limiting flange (1022) circumferentially at the top edge of the receiving slot (1011), the first limiting flange (1022) protrudes inward from the top edge of the receiving slot (1011) to restrain the mobile phone within the receiving slot (1011); the bottom edge of the supporting shell (102) is provided with a second limiting flange (1023) circumferentially, the second limiting flange (1023) protrudes outward from the bottom of the supporting shell (102); the first limiting flange (1022) and the second limiting flange (1023) detachably limit the support shell (102) within the receiving slot (1011).

10. The mobile phone case assembly of claims 1 to 3, **characterized in that** at least one end of the supporting shell (102) is provided with a first avoidance recess (1024); the first avoidance recess (1024) is provided on the edge of the supporting shell (102), when the supporting shell (102) is positioned within the receiving slot (1011), the first avoidance recess (1024) communicates with the receiving slot (1011).

11. The mobile phone case assembly of claims 1 to 3, **characterized in that** a limiting protrusion (1025) extending inward toward the interior of the storage slot (1021) is provided from the top edge of the storage slot (1021) of the supporting shell (102), the lens protective frame (103) is detachably stored in the storage slot (1021) by the limiting protrusion (1025), an arcuate transition surface is provided between the limiting protrusion (1025) and the storage slot (1021).

12. The mobile phone case assembly of claims 1 to 3, **characterized in that** the supporting shell (102) further comprises a second avoidance recess (1027) positioned at the edge of the storage slot (1021), the second avoidance recess (1027) communicates with the storage slot (1021).

13. The mobile phone case assembly of claim 12, **characterized in that** at least two of the second avoidance recesses (1027) are positioned on opposite sides of the storage slot (1021), and the two second avoidance recesses (1027) symmetrically arranged relative to the storage slot (1021).

14. The mobile phone case assembly of claims 1 to 3, **characterized in that** the storage slot (1021) is rectangular, at least two rectangular storage slots (1021) are arranged sequentially along the lengthwise direction of the supporting shell (102), and the storage slots (102) are inclined relative to the supporting shell (102), when the supporting shell (102) is positioned in the receiving slot (1011), at least one corner of at least one of the storage slots (1021) communicates with the receiving slot (1011).

15. A mobile phone case customized unmanned vending apparatus, comprises a mobile phone case customized unmanned vending machine and the mobile phone case assembly of claims 1 to 14; the mobile phone case customized unmanned vending machine comprises a base frame (10), a mobile phone case storage and conveying mechanism (20) and a mobile phone case printing device (30);
the base frame (10) is provided with a plurality of bins (11), each bin (11) contains the corresponding model of the mobile phone case assembly;
the mobile phone case printing device (30) comprises a printing mechanism (50) and a mobile phone case shaping jig (60), the printing mechanism (50) is mounted on the base frame (10), and the mobile phone case shaping jig (60) is arranged below the printing mechanism (50);
based on the model information of the mobile phone case assemble to be printed, the mobile phone case storage and conveying mechanism (20) obtains the corresponding mobile phone case assemble from the corresponding storage bin (11), and then transfers the mobile phone case assemble onto the mobile phone case shaping jig (60);
the mobile phone case shaping jig (60) fixes the positions of the mobile phone case assembly;
based on the image to be printed, the mobile phone case printing device (30) performs printing on the printing surface (1020) on the side of the mobile phone case body (101) opposite the storage slot (1021), after printing is complete, the lens protective frame (103) is able to be moved from the storage slot (1021) of the supporting shell (102) and be assembled in the mobile phone lens avoidance hole (1012) of the mobile phone case body (101) by users.
